# EUROPEAN PATENT APPLICATION

(11) **EP 4 535 873 A1**
(43) Date of publication of application: **09.04.2025**
(21) Application number: 23823224.3
(22) Date of filing: 15.06.2023
(51) Int. Cl.: H04W 48/08

(54) **COMMUNICATION METHOD AND APPARATUS, AND COMPUTER-READABLE STORAGE MEDIUM**

(30) Priority: 17.06.2022 CN 202210690326
(71) Applicant: Huawei Technologies Co., Ltd., Shenzhen, Guangdong 518129 (CN)
(72) Inventor: ZHU, Shichao, Shenzhen, Guangdong 518129 (CN); SHI, Yulong, Shenzhen, Guangdong 518129 (CN); SUN, Fei, Shenzhen, Guangdong 518129 (CN); ZHU, Yuanping, Shenzhen, Guangdong 518129 (CN)
(74) Representative: Körber, Martin Hans
(86) International application number: PCT/CN2023/100461
(87) International publication number: WO 2023/241658

(57) **Abstract**

A communication method and apparatus, and a computer-readable storage medium are provided. A first access network device sends, to a first relay device, first indication information indicating whether access of a mobile relay device is allowed. When the first relay device is a mobile relay device, the first relay device sends an access request to a second access network device that allows access of a mobile relay device, so that a mobile relay device initiates an access request to an access network device that allows access of a mobile relay device, ensuring normal access of the mobile relay device.

## Description

This application claims priority to Chinese Patent Application No. 202210690326.6, filed with the China National Intellectual Property Administration on June 17, 2022 and entitled "COMMUNICATION METHOD AND APPARATUS, AND COMPUTER-READABLE STORAGE MEDIUM", which is incorporated herein by reference in its entirety.

### TECHNICAL FIELD

Embodiments of this application relate to the field of communication technologies, and in particular, to a communication method and apparatus, and a computer-readable storage medium.

### BACKGROUND

A 5th generation (5th generation, 5G) communication system imposes stricter requirements on network performance indicators, for example, a 1000-fold increase in a capacity indicator, wider coverage, ultra-high reliability, and an ultra-low delay. In consideration that high-frequency carrier frequency resources are abundant, high-frequency small cells are used for networking in hotspot areas to meet the requirement for the ultra-high capacity of 5G. However, due to problems such as poor propagation performance, severe attenuation due to shielding, and limited coverage of high-frequency carriers, a large quantity of small cells need to be densely deployed. As a result, a large quantity of optical fibers are required for backhaul, but deployment of optical fibers is difficult. In addition, to meet the requirement for the wide coverage of 5G, network coverage needs to be provided in some remote areas, but deployment of optical fibers is difficult. Therefore, to resolve the foregoing problems, an integrated access and backhaul (integrated access and backhaul, IAB) technology in which both an access link (access link) and a backhaul link (backhaul link) use wireless transmission is introduced in the industry. In the IAB technology, UE accesses an IAB-node through a wireless access link, and the IAB-node is connected to a base station through a wireless backhaul link.

In release 16 (release 16, Rel-16) and release 17 (release 17, Rel-17), a location of an IAB-node in an IAB network is fixed. In release 18 (release 18, Rel-18), a location of an IAB-node may change. Therefore, it is very important to ensure normal access of a mobile IAB-node.

### SUMMARY

Embodiments of this application disclose a communication method and apparatus, and a computer-readable storage medium, to ensure normal access of a mobile relay device.

According to a first aspect, this application discloses a communication method. The communication method may be applied to a first access network device, or may be applied to a module (for example, a chip) in the first access network device, or may be applied to a logical module or software that can implement all or some functions of the first access network device. The following uses an example in which an execution body is the first access network device for description. The communication method may include:

A first access network device sends first indication information to a first relay device, where the first indication information indicates whether access of a mobile relay device is allowed, and the first relay device is a relay device that initially accesses a network.

In this embodiment of this application, the access network device may send, to the relay device, the indication information indicating whether access of a mobile relay device is allowed, so that a mobile relay device can select, based on the indication information sent by the access network device, an access network device that allows access of a mobile relay device, ensuring normal access of the mobile relay device. In addition, the mobile relay device selects the access network device that allows access of a mobile relay device for access. Therefore, the mobile relay device can be prevented from accessing an access network device that does not allow access of a mobile relay device. In this way, access control on the mobile relay device is implemented.

In a possible implementation, when the first access network device is a donor node, the first indication information indicates that access of a mobile relay device is allowed; or when the first access network device is a relay device, the first indication information indicates that access of a mobile relay device is not allowed.

In this embodiment of this application, the access network device allows access of a mobile relay device only when the access network device is a donor node. This can prevent the mobile relay device from accessing a mobile relay device or a fixed relay device.

In a possible implementation, when the first access network device is a donor node or a fixed relay device, the first indication information indicates that access of a mobile relay device is allowed; or when the first access network device is a mobile relay device, the first indication information indicates that access of a mobile relay device is not allowed.

In this embodiment of this application, the access network device allows access of a mobile relay device only when the access network device is a donor node or a fixed relay device. This can prevent the mobile relay device from accessing a mobile relay device.

In a possible implementation, that the first indication information indicates whether access of a mobile relay device is allowed may include: The first indication information indicates whether the first access network device is a relay device.

In this embodiment of this application, the access network device indicates, by indicating whether the access network device is a relay device, whether access of a mobile relay device is allowed. This can ensure that the access network device allows access of a mobile relay device only when the access network device is a donor node, and can prevent the mobile relay device from accessing a mobile relay device or a fixed relay device.

In a possible implementation, that the first indication information indicates whether the first access network device is a relay device may include:
when the first access network device is a donor node, the first indication information indicates that the first access network device is not a relay device; or
when the first access network device is a relay device, namely, a mobile relay device or a fixed relay device, the first indication information indicates that the first access network device is a relay device.

In a possible implementation, that the first indication information indicates whether access of a mobile relay device is allowed may include: The first indication information indicates whether the first access network device is a mobile relay device.

In this embodiment of this application, the access network device indicates, by indicating whether the access network device is a mobile relay device, whether access of a mobile relay device or a fixed relay device is allowed. This can ensure that the access network device allows access of a mobile relay device or a fixed relay device only when the access network device is a donor node or a fixed relay device, and can prevent the mobile relay device or the fixed relay device from accessing a mobile relay device.

In a possible implementation, that the first indication information indicates whether access of a mobile relay device is allowed may include: The first indication information indicates whether access of a relay device is allowed.

In this embodiment of this application, the access network device indicates, by indicating whether access of a relay device is allowed, whether access of a mobile relay device or a fixed relay device is allowed. This can ensure that the access network device allows access of a mobile relay device or a fixed relay device only when the access network device is a donor node or a fixed relay device, and can prevent the mobile relay device or the fixed relay device from accessing a mobile relay device.

In a possible implementation, that the first indication information indicates whether access of a relay device is allowed may include:
when the first access network device is a mobile relay device, the first indication information indicates that access of a relay device is not allowed; or
when the first access network device is a fixed relay device or a donor node, the first indication information indicates that access of a relay device is allowed.

In a possible implementation, when the first indication information indicates that access of a mobile relay device is allowed, the communication method may further include:

The first access network device receives an access request from the first relay device.

In a possible implementation, the communication method may further include:

The first access network device sends second indication information to an access and mobility management function (access and mobility management function, AMF) network element, where the second indication information indicates whether the first relay device is a mobile relay device.

In this embodiment of this application, after successfully accessing the first access network device, the first relay device may send, to the AMF, the indication information indicating whether the first relay device is a mobile relay device, to find an AMF network element supporting a mobile relay device for the mobile relay device, and find an AMF network element supporting a fixed relay device for the fixed relay device, that is, find corresponding AMF network elements for different types of relay devices, so that a core network can correctly provide services for the relay device.

In a possible implementation, the first indication information is carried in system information.

In this embodiment of this application, the access network device broadcasts the indication information via the system information, to ensure that all relay devices within coverage of the access network device can receive the indication information, so that a mobile relay device can select, based on the indication information, an access network device that allows access of a mobile relay device for access, and normal access of the mobile relay device can be ensured.

According to a second aspect, this application discloses a communication method. The communication method may be applied to a first relay device, or may be applied to a module (for example, a chip) in the first relay device, or may be applied to a logical module or software that can implement all or some functions of the first relay device. The first relay device is a relay device that initially accesses a network. The following uses an example in which an execution body is the first relay device for description. The communication method may include:

The first relay device receives a plurality of pieces of first indication information from a plurality of access network devices, where first indication information corresponding to a first access network device in the plurality of pieces of first indication information indicates whether the first access network device allows access of a mobile relay device, and the first access network device is any one of the plurality of access network devices.

The first relay device sends an access request to a second access network device when the first relay device is a mobile relay device, where the second access network device is an access network device that is in the plurality of access network devices and that allows access of a mobile relay device.

In this embodiment of this application, after receiving the indication information that is from the access network device and that indicates whether access of a mobile relay device is allowed, the relay device may select, based on the indication information sent by the access network device, the access network device that allows access of a mobile relay device for access, so that normal access of the mobile relay device can be ensured. In addition, the mobile relay device selects the access network device that allows access of a mobile relay device for access. Therefore, the mobile relay device can be prevented from accessing an access network device that does not allow access of a mobile relay device. In this way, access control on the mobile relay device is implemented.

In a possible implementation, when the first access network device is a donor node, the first indication information corresponding to the first access network device indicates that the first access network device allows access of a mobile relay device; or when the first access network device is a relay device, the first indication information corresponding to the first access network device indicates that the first access network device does not allow access of a mobile relay device.

In this embodiment of this application, the access network device allows access of a mobile relay device only when the access network device is a donor node. This can prevent the mobile relay device from accessing a mobile relay device or a fixed relay device.

In a possible implementation, when the first access network device is a donor node or a fixed relay device, the first indication information corresponding to the first access network device indicates that the first access network device allows access of a mobile relay device; or when the first access network device is a mobile relay device, the first indication information corresponding to the first access network device indicates that the first access network device does not allow access of a mobile relay device.

In this embodiment of this application, the access network device allows access of a mobile relay device only when the access network device is a donor node or a fixed relay device. This can prevent the mobile relay device from accessing a mobile relay device.

In a possible implementation, that first indication information corresponding to a first access network device indicates whether the first access network device allows access of a mobile relay device may include: The first indication information corresponding to the first access network device indicates whether the first access network device is a relay device; and when the first indication information indicates that the first access network device is a relay device, it is determined that the first access network device does not allow access of a mobile relay device; or when the first indication information indicates that the first access network device is not a relay device, it is determined that the first access network device allows access of a mobile relay device.

In this embodiment of this application, the relay device can determine, based on whether the access network device is a relay device, whether the access network device allows access of a mobile relay device. This can ensure that the mobile relay device can access the access network device only when the access network device is a donor node, and can prevent the mobile relay device from accessing a mobile relay device or a fixed relay device.

In a possible implementation, that the first indication information corresponding to the first access network device indicates whether the first access network device is a relay device may include:
when the first access network device is a donor node, the first indication information corresponding to the first access network device indicates that the first access network device is not a relay device; or
when the first access network device is a relay device, the first indication information corresponding to the first access network device indicates that the first access network device is a relay device.

In a possible implementation, that first indication information corresponding to a first access network device indicates whether the first access network device allows access of a mobile relay device may include: The first indication information corresponding to the first access network device indicates whether the first access network device is a mobile relay device; and when the first indication information indicates that the first access network device is a mobile relay device, it is determined that the first access network device does not allow access of a relay device; or when the first indication information indicates that the first access network device is not a mobile relay device, it is determined that the first access network device allows access of a relay device.

In this embodiment of this application, the relay device can determine, based on whether the access network device is a mobile relay device, whether the access network device allows access of a mobile relay device or a fixed relay device. This can ensure that a mobile relay device or a fixed relay device can access the access network device only when the access network device is a donor node or a fixed relay device, and can prevent the mobile relay device or the fixed relay device from accessing a mobile relay device.

In a possible implementation, that first indication information corresponding to a first access network device indicates whether the first access network device allows access of a mobile relay device may include: The first indication information corresponding to the first access network device indicates whether the first access network device allows access of a relay device.

In this embodiment of this application, the access network device indicates, by indicating whether access of a relay device is allowed, whether access of a mobile relay device or a fixed relay device is allowed. This can ensure that a mobile relay device or a fixed relay device can access the access network device only when the access network device is a donor node or a fixed relay device, and can prevent the mobile relay device or the fixed relay device from accessing a mobile relay device.

In a possible implementation, that the first indication information corresponding to the first access network device indicates whether the first access network device allows access of a relay device may include:
when the first access network device is a mobile relay device, the first indication information corresponding to the first access network device indicates that the first access network device does not allow access of a relay device; or
when the first access network device is a fixed relay device or a donor node, the first indication information corresponding to the first access network device indicates that the first access network device allows access of a relay device.

In a possible implementation, the first indication information is carried in system information.

In this embodiment of this application, each initially accessing terminal device may receive the indication information broadcast by the access network device via the system information, and may select, based on the indication information, an access network device that allows access of a mobile relay device for access, so that normal access of the mobile relay device can be ensured.

According to a third aspect, this application discloses a communication method. The communication method may be applied to a first relay device, or may be applied to a module (for example, a chip) in the first relay device, or may be applied to a logical module or software that can implement all or some functions of the first relay device. The first relay device is a relay device that initially accesses a network. The following uses an example in which an execution body is the first relay device for description. The communication method may include:

The first relay device sends first indication information to a first access network device, where the first indication information indicates whether the first relay device is a mobile relay device, and the first access network device is a donor node corresponding to a second access network device that is being accessed by the first relay device.

The first relay device receives second indication information from the first access network device, where the second indication information indicates that the second access network device does not allow access of the first relay device, the second indication information further indicates a third access network device, and the third access network device is an access network device that allows access of the first relay device.

The first relay device sends a random access request to the third access network device.

In this embodiment of this application, in a random access process, the relay device may send, to the donor node corresponding to the access network device that is being accessed, the indication information indicating whether the relay device is a mobile relay device, so that the donor node can determine, based on the indication information, whether the access network device allows access of a relay device. When it is determined that the access network device does not allow access of a relay device, the relay device may be redirected to another access network device, so that normal access of the relay device can be ensured.

According to a fourth aspect, this application discloses a communication method. The communication method may be applied to a first access network device, or may be applied to a module (for example, a chip) in the first access network device, or may be applied to a logical module or software that can implement all or some functions of the first access network device. The following uses an example in which an execution body is the first access network device for description. The communication method may include:

The first access network device receives first indication information from a first relay device, where the first indication information indicates whether the first relay device is a mobile relay device, and the first relay device is a relay device that initially accesses a network.

The first access network device sends second indication information to the first relay device when a second access network device does not allow access of the first relay device, where the second access network device is an access network device that is being accessed by the first relay device, the first access network device is a donor node corresponding to the second access network device, the second indication information indicates that the second access network device does not allow access of the first relay device, the second indication information further indicates a third access network device, and the third access network device is an access network device that allows access of the first relay device.

In this embodiment of this application, when the access network device managed by the donor node is accessed by the relay device, the donor node may receive the indication information that is from the relay device and that indicates whether the relay device is a mobile relay device, and determine, based on the indication information, whether the access network device allows access of a relay device. When it is determined that the access network device does not allow access of a relay device, the relay device may be redirected to another access network device, so that normal access of the relay device can be ensured.

In a possible implementation, the communication method may further include:
when the first indication information indicates that the first relay device is a mobile relay device, and the second access network device does not allow access of a mobile relay device, the first access network device determines that the second access network device does not allow access of the first relay device; or
when the first indication information indicates that the first relay device is a fixed relay device, and the second access network device is a mobile relay device, the first access network device determines that the second access network device does not allow access of the first relay device.

In this embodiment of this application, the fixed relay device can be prevented from accessing a mobile relay device, and the mobile relay device can be prevented from accessing a mobile relay device (and a fixed relay device).

In a possible implementation, the communication method may further include:

The first access network device receives third indication information from a fourth access network device, where the third indication information indicates an access network device that allows access of a relay device or indicates an access network device that allows access of a mobile relay device, the fourth access network device is a donor node corresponding to the third access network device, and the access network device indicated by the third indication information includes the third access network device.

In this embodiment of this application, different donor nodes exchange access network devices that allow access of a relay device or a mobile relay device and that are in access network devices managed by the donor nodes, so that the donor node does not need to obtain information from another donor node during redirection. This can improve redirection efficiency.

According to a fifth aspect, this application discloses a communication method. The communication method may be applied to a fourth access network device, or may be applied to a module (for example, a chip) in the fourth access network device, or may be applied to a logical module or software that can implement all or some functions of the fourth access network device. The following uses an example in which an execution body is the fourth access network device for description. The communication method may include:

The fourth access network device sends fourth indication information to an AMF network element when a first relay device successfully accesses a third access network device, where the fourth indication information indicates whether the first relay device is a mobile relay device, the first relay device is a relay device that initially accesses a network, and the third access network device is an access network device managed by the fourth access network device.

In this embodiment of this application, after the first relay device successfully accesses the access network device managed by a donor node, the donor node may send, to the AMF, the indication information indicating whether the first relay device is a mobile relay device, to find an AMF network element supporting a mobile relay device for the mobile relay device, and find an AMF network element supporting a fixed relay device for the fixed relay device, that is, find corresponding AMF network elements for different types of relay devices, so that a core network can correctly provide services for the relay device.

In a possible implementation, the communication method may further include:

The fourth access network device sends third indication information to a first access network device, where the third indication information indicates an access network device that allows access of a relay device or indicates an access network device that allows access of a mobile relay device, and the access network device indicated by the third indication information includes the third access network device.

In this embodiment of this application, different donor nodes can interact with access network devices that allow access of a relay device or a mobile relay device and that are in access network devices mutually managed by the donor nodes, so that the donor node does not need to obtain information from another donor node during redirection. This can improve redirection efficiency.

According to a sixth aspect, this application discloses a communication method. The communication method may be applied to a first donor node, or may be applied to a module (for example, a chip) in the first donor node, or may be applied to a logical module or software that can implement all or some functions of the first donor node. The following uses an example in which an execution body is the first donor node for description. The communication method may include:

The first donor node sends a handover request to a second donor node, where the handover request includes first indication information and second indication information, the first indication information indicates whether a first relay device is a mobile relay device, the first relay device is a to-be-handed-over relay device, the second indication information indicates a first access network device, the first access network device is a target access network device to which the first relay device is handed over, the first donor node is a donor node corresponding to a second access network device, the second access network device is a source access network device from which the first relay device is handed over, and the second donor node is a donor node corresponding to the first access network device.

The first donor node receives a handover request acknowledgment or a handover preparation failure from the second donor node, where the handover request acknowledgment indicates that the first access network device allows access of the first relay device, and the handover preparation failure indicates that the first access network device does not allow access of the first relay device.

In this embodiment of this application, in a handover process of the relay device, the handover request sent by the first donor node corresponding to the source access network device (namely, an access network device accessed before the handover) to the second donor node corresponding to the target access network device (an access network device to be accessed) may carry the indication information indicating whether the relay device is a mobile relay device, so that the second donor node can determine, based on the indication information, whether the target access network device allows access of the relay device. This can prevent the relay device from being handed over to an access network device that does not allow access of a relay device. In this way, access control on the relay device is implemented.

According to a seventh aspect, this application discloses a communication method. The communication method may be applied to a second donor node, or may be applied to a module (for example, a chip) in the second donor node, or may be applied to a logical module or software that can implement all or some functions of the second donor node. The following uses an example in which an execution body is the second donor node for description. The communication method may include:

The second donor node receives a handover request from a first donor node, where the handover request includes first indication information and second indication information, the first indication information indicates whether a first relay device is a mobile relay device, the first relay device is a to-be-handed-over relay device, the second indication information indicates a first access network device, the first access network device is a target access network device to which the first relay device is handed over, the first donor node is a donor node corresponding to a second access network device, the second access network device is a source access network device from which the first relay device is handed over, and the second donor node is a donor node corresponding to the first access network device.

The second donor node sends a handover request acknowledgment or a handover preparation failure to the first donor node based on the first indication information, where the handover request acknowledgment indicates that the first access network device allows access of the first relay device, and the handover preparation failure indicates that the first access network device does not allow access of the first relay device.

In this embodiment of this application, in a handover process of the relay device, the handover request that is from the first donor node corresponding to the source access network device (namely, an access network device accessed before the handover) and that is received by the second donor node corresponding to the target access network device (an access network device to be accessed) may carry the indication information indicating whether the relay device is a mobile relay device, so that the second donor node can determine, based on the indication information, whether the target access network device allows access of the relay device. This can prevent the relay device from being handed over to an access network device that does not allow access of a relay device. In this way, access control on the relay device is implemented.

In a possible implementation, that the second donor node sends a handover request acknowledgment or a handover preparation failure to the first donor node based on the first indication information may include:

The second donor node sends the handover preparation failure to the first donor node when the first indication information indicates that the first relay device is a mobile relay device and the first access network device does not allow access of a mobile relay device, or when the first indication information indicates that the first relay device is a fixed relay device and the first access network device is a mobile relay device.

The second donor node sends the handover request acknowledgment to the first donor node when the first indication information indicates that the first relay device is a mobile relay device and the first access network device allows access of a mobile relay device, or when the first indication information indicates that the first relay device is a fixed relay device and the first access network device is a fixed relay device or a donor node.

In this embodiment of this application, the fixed relay device can be prevented from accessing a mobile relay device, and the mobile relay device can be prevented from accessing a mobile relay device (and a fixed relay device).

According to an eighth aspect, this application discloses a communication apparatus. The communication apparatus may be used in a first access network device, or may be used in a module (for example, a chip) in the first access network device, or may be used in a logical module or software that can implement all or some functions of the first access network device. The communication apparatus may include a processing unit and a transceiver unit.

The transceiver unit is configured to send, under control of the processing unit, first indication information to a first relay device, where the first indication information indicates whether access of a mobile relay device is allowed, and the first relay device is a relay device that initially accesses a network.

In a possible implementation, when the first access network device is a donor node, the first indication information indicates that access of a mobile relay device is allowed; or when the first access network device is a relay device, the first indication information indicates that access of a mobile relay device is not allowed.

In a possible implementation, when the first access network device is a donor node or a fixed relay device, the first indication information indicates that access of a mobile relay device is allowed; or when the first access network device is a mobile relay device, the first indication information indicates that access of a mobile relay device is not allowed.

In a possible implementation, that the first indication information indicates whether access of a mobile relay device is allowed may include: The first indication information indicates whether the first access network device is a relay device.

In a possible implementation, that the first indication information indicates whether the first access network device is a relay device may include:
when the first access network device is a donor node, the first indication information indicates that the first access network device is not a relay device; or
when the first access network device is a relay device, the first indication information indicates that the first access network device is a relay device.

In a possible implementation, that the first indication information indicates whether access of a mobile relay device is allowed may include: The first indication information indicates whether the first access network device is a mobile relay device.

In a possible implementation, that the first indication information indicates whether access of a mobile relay device is allowed may include: The first indication information indicates whether access of a relay device is allowed.

In a possible implementation, that the first indication information indicates whether access of a relay device is allowed may include:
when the first access network device is a mobile relay device, the first indication information indicates that access of a relay device is not allowed; or
when the first access network device is a fixed relay device or a donor node, the first indication information indicates that access of a relay device is allowed.

In a possible implementation, the transceiver unit is further configured to receive, under control of the processing unit, an access request from the first relay device when the first indication information indicates that access of a mobile relay device is allowed.

In a possible implementation, the transceiver unit is further configured to send, under control of the processing unit, second indication information to an AMF network element, where the second indication information indicates whether the first relay device is a mobile relay device.

In a possible implementation, the first indication information is carried in system information.

According to a ninth aspect, this application discloses a communication apparatus. The communication apparatus may be used in a first relay device, or may be used in a module (for example, a chip) in the first relay device, or may be used in a logical module or software that can implement all or some functions of the first relay device. The first relay device is a relay device that initially accesses a network. The communication apparatus may include a processing unit and a transceiver unit.

The transceiver unit is configured to receive, under control of the processing unit, a plurality of pieces of first indication information from a plurality of access network devices, where first indication information corresponding to a first access network device in the plurality of pieces of first indication information indicates whether the first access network device allows access of a mobile relay device, and the first access network device is any one of the plurality of access network devices.

The transceiver unit is further configured to send, under control of the processing unit, an access request to a second access network device when the first relay device is a mobile relay device, where the second access network device is an access network device that is in the plurality of access network devices and that allows access of a mobile relay device.

In a possible implementation, when the first access network device is a donor node, the first indication information corresponding to the first access network device indicates that the first access network device allows access of a mobile relay device; or when the first access network device is a relay device, the first indication information corresponding to the first access network device indicates that the first access network device does not allow access of a mobile relay device.

In a possible implementation, when the first access network device is a donor node or a fixed relay device, the first indication information corresponding to the first access network device indicates that the first access network device allows access of a mobile relay device; or when the first access network device is a mobile relay device, the first indication information corresponding to the first access network device indicates that the first access network device does not allow access of a mobile relay device.

In a possible implementation, that first indication information corresponding to a first access network device indicates whether the first access network device allows access of a mobile relay device may include: The first indication information corresponding to the first access network device indicates whether the first access network device is a relay device; and when the first indication information indicates that the first access network device is a relay device, it is determined that the first access network device does not allow access of a mobile relay device; or when the first indication information indicates that the first access network device is not a relay device, it is determined that the first access network device allows access of a mobile relay device.

In a possible implementation, that the first indication information corresponding to the first access network device indicates whether the first access network device is a relay device may include:
when the first access network device is a donor node, the first indication information corresponding to the first access network device indicates that the first access network device is not a relay device; or
when the first access network device is a relay device, the first indication information corresponding to the first access network device indicates that the first access network device is a relay device.

In a possible implementation, that first indication information corresponding to a first access network device indicates whether the first access network device allows access of a mobile relay device may include: The first indication information corresponding to the first access network device indicates whether the first access network device is a mobile relay device; and when the first indication information indicates that the first access network device is a mobile relay device, it is determined that the first access network device does not allow access of a relay device; or when the first indication information indicates that the first access network device is not a mobile relay device, it is determined that the first access network device allows access of a relay device.

In a possible implementation, that first indication information corresponding to a first access network device indicates whether the first access network device allows access of a mobile relay device may include: The first indication information corresponding to the first access network device indicates whether the first access network device allows access of a relay device.

In a possible implementation, that the first indication information corresponding to the first access network device indicates whether the first access network device allows access of a relay device may include:
when the first access network device is a mobile relay device, the first indication information corresponding to the first access network device indicates that the first access network device does not allow access of a relay device; or
when the first access network device is a fixed relay device or a donor node, the first indication information corresponding to the first access network device indicates that the first access network device allows access of a relay device.

In a possible implementation, the first indication information is carried in system information.

According to a tenth aspect, this application discloses a communication apparatus. The communication apparatus may be used in a first relay device, or may be used in a module (for example, a chip) in the first relay device, or may be used in a logical module or software that can implement all or some functions of the first relay device. The first relay device is a relay device that initially accesses a network. The communication apparatus may include a processing unit and a transceiver unit.

The transceiver unit is configured to send, under control of the processing unit, first indication information to a first access network device, where the first indication information indicates whether the first relay device is a mobile relay device, and the first access network device is a donor node corresponding to a second access network device that is being accessed by the first relay device.

The transceiver unit is further configured to receive, under control of the processing unit, second indication information from the first access network device, where the second indication information indicates that the second access network device does not allow access of the first relay device, the second indication information further indicates a third access network device, and the third access network device is an access network device that allows access of the first relay device.

The transceiver unit is further configured to send, under control of the processing unit, a random access request to the third access network device.

According to an eleventh aspect, this application discloses a communication apparatus. The communication apparatus may be used in a first access network device, or may be used in a module (for example, a chip) in the first access network device, or may be used in a logical module or software that can implement all or some functions of the first access network device. The communication apparatus may include a processing unit and a transceiver unit.

The transceiver unit is configured to receive, under control of the processing unit, first indication information from a first relay device, where the first indication information indicates whether the first relay device is a mobile relay device, and the first relay device is a relay device that initially accesses a network.

The transceiver unit is further configured to send, under control of the processing unit, second indication information to the first relay device when a second access network device does not allow access of the first relay device, where the second access network device is an access network device that is being accessed by the first relay device, the first access network device is a donor node corresponding to the second access network device, the second indication information indicates that the second access network device does not allow access of the first relay device, the second indication information further indicates a third access network device, and the third access network device is an access network device that allows access of the first relay device.

In a possible implementation, the processing unit is configured to:
when the first indication information indicates that the first relay device is a mobile relay device, and the second access network device does not allow access of a mobile relay device, determine that the second access network device does not allow access of the first relay device; or
when the first indication information indicates that the first relay device is a fixed relay device, and the second access network device is a mobile relay device, determine that the second access network device does not allow access of the first relay device.

In a possible implementation, the transceiver unit is further configured to receive, under control of the processing unit, third indication information from a fourth access network device, where the third indication information indicates an access network device that allows access of a relay device or indicates an access network device that allows access of a mobile relay device, the fourth access network device is a donor node corresponding to the third access network device, and the access network device indicated by the third indication information includes the third access network device.

According to a twelfth aspect, this application discloses a communication apparatus. The communication apparatus may be used in a fourth access network device, or may be used in a module (for example, a chip) in the fourth access network device, or may be used in a logical module or software that can implement all or some functions of the fourth access network device. The communication apparatus may include a processing unit and a transceiver unit.

The transceiver unit is configured to send, under control of the processing unit, fourth indication information to an AMF network element when a first relay device successfully accesses a third access network device, where the fourth indication information indicates whether the first relay device is a mobile relay device, the first relay device is a relay device that initially accesses a network, and the third access network device is an access network device managed by the fourth access network device.

In a possible implementation, the transceiver unit is further configured to send, under control of the processing unit, third indication information to a first access network device, where the third indication information indicates an access network device that allows access of a relay device or indicates an access network device that allows access of a mobile relay device, and the access network device indicated by the third indication information includes the third access network device.

According to a thirteenth aspect, this application discloses a communication apparatus. The communication apparatus may be used in a first donor node, or may be used in a module (for example, a chip) in the first donor node, or may be used in a logical module or software that can implement all or some functions of the first donor node. The communication apparatus may include a processing unit and a transceiver unit.

The transceiver unit is configured to send, under control of the processing unit, a handover request to a second donor node, where the handover request includes first indication information and second indication information, the first indication information indicates whether a first relay device is a mobile relay device, the first relay device is a to-be-handed-over relay device, the second indication information indicates a first access network device, the first access network device is a target access network device to which the first relay device is handed over, the first donor node is a donor node corresponding to a second access network device, the second access network device is a source access network device from which the first relay device is handed over, and the second donor node is a donor node corresponding to the first access network device.

The transceiver unit is further configured to receive, under control of the processing unit, a handover request acknowledgment or a handover preparation failure from the second donor node, where the handover request acknowledgment indicates that the first access network device allows access of the first relay device, and the handover preparation failure indicates that the first access network device does not allow access of the first relay device.

According to a fourteenth aspect, this application discloses a communication apparatus. The communication apparatus may be used in a second donor node, or may be used in a module (for example, a chip) in the second donor node, or may be used in a logical module or software that can implement all or some functions of the second donor node. The communication apparatus may include a processing unit and a transceiver unit.

The transceiver unit is configured to receive, under control of the processing unit, a handover request from a first donor node, where the handover request includes first indication information and second indication information, the first indication information indicates whether a first relay device is a mobile relay device, the first relay device is a to-be-handed-over relay device, the second indication information indicates a first access network device, the first access network device is a target access network device to which the first relay device is handed over, the first donor node is a donor node corresponding to a second access network device, the second access network device is a source access network device from which the first relay device is handed over, and the second donor node is a donor node corresponding to the first access network device.

The transceiver unit is further configured to send, under control of the processing unit, a handover request acknowledgment or a handover preparation failure to the first donor node based on the first indication information, where the handover request acknowledgment indicates that the first access network device allows access of the first relay device, and the handover preparation failure indicates that the first access network device does not allow access of the first relay device.

In a possible implementation, that the transceiver unit sends a handover request acknowledgment or a handover preparation failure to the first donor node based on the first indication information may include:

The second donor node sends the handover preparation failure to the first donor node when the first indication information indicates that the first relay device is a mobile relay device and the first access network device does not allow access of a mobile relay device, or when the first indication information indicates that the first relay device is a fixed relay device and the first access network device is a mobile relay device.

The second donor node sends the handover request acknowledgment to the first donor node when the first indication information indicates that the first relay device is a mobile relay device and the first access network device allows access of a mobile relay device, or when the first indication information indicates that the first relay device is a fixed relay device and the first access network device is a fixed relay device or a donor node.

According to a fifteenth aspect, this application discloses a communication apparatus. The communication apparatus may be a first access network device (or a first relay device, or a fourth access network device, or a first donor node, or a second donor node), or may be a module (for example, a chip) in the first access network device (or the first relay device, or the fourth access network device, or the first donor node, or the second donor node). The communication apparatus includes a processor. The processor is coupled to a memory. The memory is configured to store a program or instructions. When the program or the instructions are executed by the processor, the processor is enabled to perform the method disclosed in the foregoing corresponding method embodiment.

According to a sixteenth aspect, this application discloses a communication apparatus. The communication apparatus may be a first access network device (or a first relay device, or a fourth access network device, or a first donor node, or a second donor node), or may be a module (for example, a chip) in the first access network device (or the first relay device, or the fourth access network device, or the first donor node, or the second donor node). The communication apparatus includes a processor and a memory. The memory is configured to store a program or instructions. When the program or the instructions are executed by the processor, the processor is enabled to perform the method disclosed in the foregoing corresponding method embodiment.

According to a seventeenth aspect, this application discloses a communication apparatus. The communication apparatus may be a first access network device (or a first relay device, or a fourth access network device, or a first donor node, or a second donor node), or may be a module (for example, a chip) in the first access network device (or the first relay device, or the fourth access network device, or the first donor node, or the second donor node). The communication apparatus includes a communication interface and a processor, and optionally, further includes a memory. The memory is configured to store a computer program or instructions. The processor is coupled to the memory and the communication interface. When the processor executes the computer program or the instructions, the processor performs the method disclosed in the foregoing corresponding method embodiment.

According to an eighteenth aspect, this application discloses a computer program product, where the computer program product includes computer program code, and when the computer program code is run on a processor, the foregoing methods are performed.

According to a nineteenth aspect, this application discloses a chip system. The chip system includes a processor, configured to implement the functions in the foregoing methods. In a possible design, the chip system further includes a memory, configured to store program instructions and/or data. The chip system may include a chip, or may include a chip and another discrete component.

According to a twentieth aspect, this application discloses a computer-readable storage medium, where the computer-readable storage medium stores a computer program, and when the computer program is run, the foregoing methods are implemented.

Beneficial effects of the eighth aspect to the twentieth aspect are similar to beneficial effects of the corresponding methods in the first aspect to the seventh aspect. For detailed descriptions, refer to the beneficial effects of the corresponding methods.

### BRIEF DESCRIPTION OF DRAWINGS

FIG. 1 is a diagram of a network architecture according to an embodiment of this application;
FIG. 2 is a diagram of a wireless relay scenario according to an embodiment of this application;
FIG. 3 is a diagram of another network architecture according to an embodiment of this application;
FIG. 4 is a diagram of two constraints according to an embodiment of this application;
FIG. 5 is a diagram of cross-donor node-CU migration of a relay device according to an embodiment of this application;
FIG. 6 is a schematic flowchart of a communication method according to an embodiment of this application;
FIG. 7 is a schematic flowchart of another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is a schematic flowchart of still another communication method according to an embodiment of this application;
FIG. 11 is a schematic flowchart of still another communication method according to an embodiment of this application;
FIG. 12 is a schematic flowchart of still another communication method according to an embodiment of this application;
FIG. 13 is a diagram of a structure of a communication apparatus according to an embodiment of this application;
FIG. 14 is a diagram of a structure of another communication apparatus according to an embodiment of this application; and
FIG. 15 is a diagram of a structure of still another communication apparatus according to an embodiment of this application.

### DESCRIPTION OF EMBODIMENTS

Embodiments of this application disclose a communication method and apparatus, and a computer-readable storage medium, to ensure normal access of a mobile relay device. The following describes technical solutions in embodiments of this application with reference to accompanying drawings.

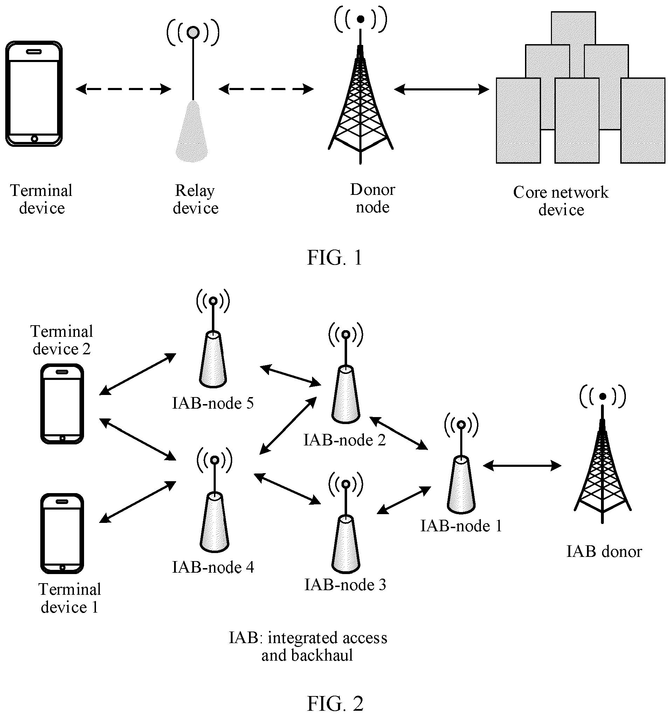

To better understand embodiments of this application, the following first describes a network architecture in embodiments of this application. FIG. 1 is a diagram of a network architecture according to an embodiment of this application. As shown in FIG. 1, the network architecture may include a terminal device, a relay device, a donor node, and a core network device. FIG. 1 shows only a case of one terminal device, one relay device, and one donor node. A link between the terminal device and the relay device is an access link, a link between the relay device and the donor node is a backhaul link, and both the access link and the backhaul link are wireless links. The relay device is configured to: provide a wireless access service for the terminal device, and connect to the donor node through the wireless backhaul link to transmit service data of a user. The donor node is configured to connect to the core network device through a wired link.

The terminal device may be referred to as user equipment (user equipment, UE), a mobile station (mobile station, MS), a mobile terminal (mobile terminal, MT), or the like, and is a device that provides voice and/or data connectivity for the user. The terminal device may be a mobile phone (mobile phone), a handheld terminal, a customer premises equipment (customer premises equipment, CPE), a notebook computer, a subscriber unit (subscriber unit), a cellular phone (cellular phone), a smartphone (smartphone), a computing device, a wireless data card, a personal digital assistant (personal digital assistant, PDA) computer, a tablet computer, a computer with a wireless transceiver function, a wireless modem (modem), a tactile terminal device, a handheld (handheld) device, a laptop computer (laptop computer), a session initiation protocol (session initiation protocol, SIP) phone, a cordless phone (cordless phone) or a wireless local loop (wireless local loop, WLL) station, a machine-type-communications (machine-type-communications, MTC) terminal, a wearable device (for example, a smart watch, a smart band, or a pedometer), a vehicle-mounted terminal device (for example, a car, a bicycle, an electric vehicle, an airplane, a ship, a train, or a high-speed railway), an extended reality (extended reality, XR) terminal device, a virtual reality (virtual reality, VR) terminal device, an augmented reality (augmented reality, AR) terminal device, a wireless terminal in industrial control (industrial control), a smart home device (for example, a refrigerator, a television, an air conditioner, or an electricity meter), a smart robot, a workshop device, a wireless terminal in self-driving (self-driving), a wireless terminal in remote medical surgery (remote medical surgery), a wireless data card, a wireless terminal in a smart grid (smart grid), a wireless terminal in transportation safety (transportation safety), a wireless terminals in a smart city (smart city), a wireless terminal in a smart home (smart home), a flight device (for example, a smart robot, a hot air balloon, an uncrewed aerial vehicle, or an airplane), or another device that can access a network.

In addition, the terminal device may alternatively be a terminal device in a future communication system (for example, a 6th generation (6th generation, 6G) communication system), a terminal device in a future evolved public land mobile network (public land mobile network, PLMN), or the like. For example, a 6G network may further extend a form and a function of a terminal device of 5G communication, and a 6G terminal device includes but is not limited to a vehicle, a cellular network terminal device (integrating a function of a satellite terminal), an uncrewed aerial vehicle, and an internet of things (internet of things, IoT).

The relay device is configured to provide the wireless access service for the terminal device, and service data of the terminal device is transmitted by the relay device to the donor node through the wireless backhaul link. The relay device may be referred to as a relay node (relay node, RN), or may be referred to as an IAB-node (node), or may be referred to as a mounted relay (mounted relay, MR) device, for example, a vehicle mounted relay (vehicle mounted relay, VMR). The relay device may be a fixed relay device, or may be a mobile (mobile) relay device. A location of a fixed relay device is fixed, and a location of a mobile relay device may change with time. The relay device may include an MT and a distributed unit (distributed unit, DU). For a parent node, the relay device may serve as a terminal device, that is, play the role of the MT. For a child node, the relay device may serve as an access network device, that is, play the role of the DU.

The donor node may be an access network element having a complete function of an access network device, or may be an access network element in which a central unit (central unit, CU) and a DU are separated. The donor node may also be referred to as an IAB donor (donor). The donor node may include an evolved NodeB (evolved NodeB, eNB, or eNodeB) in long term evolution (long term evolution, LTE). The access network device may further include a next generation NodeB (next generation NodeB, gNB) gNB or a transmission and reception point (transmission and reception point, TRP) in a 5G network. The access network device may further include a base station evolved from a 3rd generation partnership project (3rd generation partnership project, 3GPP), a base station in a future evolved PLMN, a broadband network gateway (broadband network gateway, BNG), a 3GPP aggregation switch or a non-3GPP access device, an access point (access point, AP) in a wireless fidelity (wireless fidelity, Wi-Fi) system, a transmission point (transmission point, TP), a mobile switching center, or the like, or may be a device that functions as a base station in device-to-device (device-to-device, D2D), vehicle-to-everything (vehicle-to-everything, V2X), or machine-to-machine (machine-to-machine, M2M) communication.

The core network device is a device in a core network (core network, CN) that provides service support for the terminal device, and is mainly responsible for registration, call connection, charging, mobility management, user connection, user management, service bearer, data processing and routing, and the like. The core access network device may correspond to different devices in different communication systems. For example, in a 4th generation (4th generation, 4G) communication system, the core network device may correspond to one or more of a mobility management entity (mobility management entity, MME), a serving gateway (serving gateway, S-GW), and the like. For another example, in a 5G communication system, the core network device may correspond to one or more of an AMF network element, a session management function (session management function, SMF) network element, a user plane function (user plane function, UPF) network element, and the like. In a next-generation communication system or a future communication system, the core network device may be one or more network elements, devices, or entities that provide service support for a terminal device.

It should be noted that the network architecture shown in FIG. 1 is not limited to including only the terminal device, the relay device, the donor node, and the core network device shown in the figure, and may further include other terminal devices, relay devices, donor nodes, and core network devices that are not shown in the figure. Details are not listed in this application.

The foregoing network architecture may be used in a 5G communication system, and may be further used in a narrowband-internet of things (narrowband-internet of things, NB-IoT) system, a global system for mobile communications (global system for mobile communications, GSM) system, an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, and a communication system evolved from 5G, for example, a 6G communication system.

To better understand embodiments of this application, the following first describes related technologies in embodiments of this application.

In an IAB network, one or more relay devices may be included on a transmission path between a terminal device and a donor node. Each relay device needs to maintain a wireless backhaul link to a parent node and a wireless link to a child node. When a child node of a relay device is a terminal device, a wireless link between the relay device and the child node (namely, the terminal device) is a wireless access link. When a child node of a relay device is another relay device, a wireless link between the relay device and the child node (namely, the another relay device) is a wireless backhaul link.

For example, refer to FIG. 2. FIG. 2 is a diagram of a wireless relay scenario according to an embodiment of this application. As shown in FIG. 2, on a path "terminal device 1→IAB-node 4→IAB-node 3→IAB-node 1→IAB donor", the terminal device 1 accesses the IAB-node 4 through a wireless access link, the IAB-node 4 is connected to the IAB-node 3 through a wireless backhaul link, the IAB-node 3 is connected to the IAB-node 1 through a wireless backhaul link, and the IAB-node 1 is connected to the IAB donor through a wireless backhaul link. A parent node of the IAB-node 1 is the IAB donor, and child nodes of the IAB-node 1 are the IAB-node 2 and the IAB-node 3.

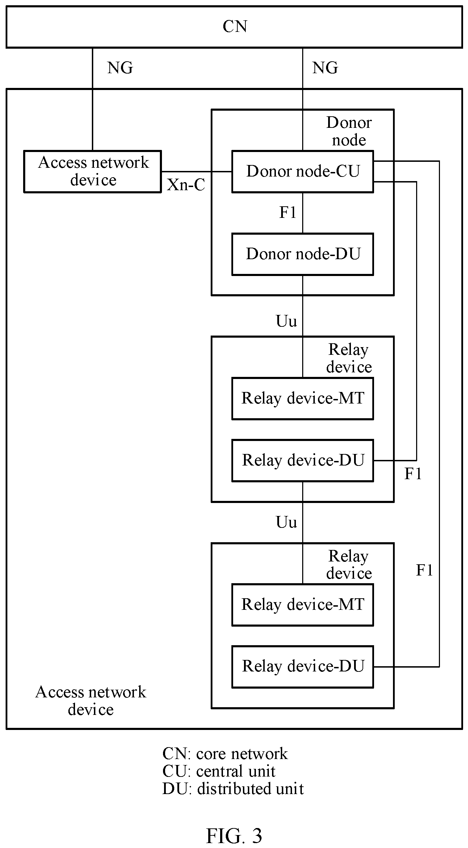

FIG. 3 is a diagram of another network architecture according to an embodiment of this application. As shown in FIG. 3, a DU of a relay device (a relay device-DU for short) is logically connected to a CU of a donor node (a CU or a donor node-CU for short) through an F1 interface. Actually, the relay device-DU is connected to the donor node-CU through a new radio (new radio, NR) Uu interface between an MT of the relay device (a relay device-MT for short) of each hop and a parent node DU. However, because the relay device-DU can finally communicate with the donor node-CU, it may be considered that the F1 interface exists logically, and the relay device-DU and the donor node-CU may exchange control (control) plane information and user (user) plane information through the F1 interface.

The 3GPP release 16 (release 16, Rel-16) standard introduces IAB for the first time, and specifies a user plane protocol stack and a control plane protocol stack of an IAB network, and an integration and migration process, operations, administration, and maintenance (operations, administration, and maintenance, OAM), routing and bearer mapping, and flow control in the network, and the like. In the 3GPP release 17 (release 17, Rel-17) standard, the IAB technology is further enhanced, and an evolution direction mainly includes optimization in aspects such as robustness, a load balancing degree, spectral efficiency, a multi-hop delay, and end-to-end performance.

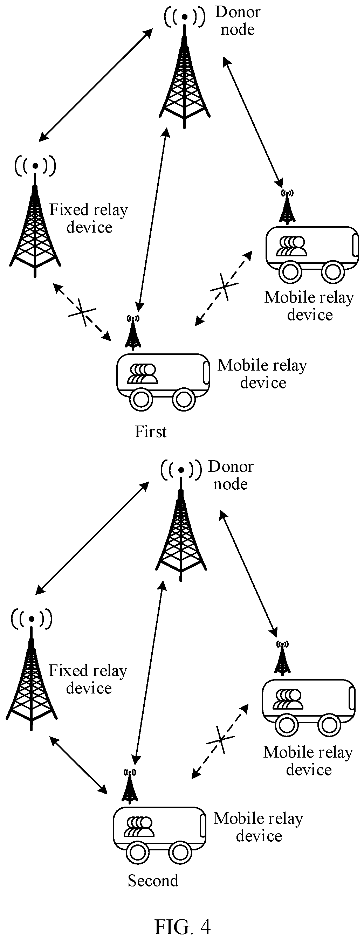

However, mobility of an IAB-node is not considered in both Rel-16 and Rel-17. In an evolution direction of the 3GPP release 18 (release 18, Rel-18) standard currently researched, mobility enhancement is performed for the IAB technology, and the problem of mobility of an IAB-node is considered. A typical scenario is that an IAB-node is deployed on a vehicle, such as a subway, a bus, or a private car, to serve a terminal device in the vehicle. Therefore, in subsequent expressions, a mobile IAB-node may be referred to as a mobile (mobile) IAB or VMR. In a non-mobile IAB scenario, as shown in FIG. 2, the backhaul link between the IAB-node and the IAB donor may be multi-hop. However, in a mobile IAB scenario, two constraints are added in Rel-18 to reduce dynamicity of the scenario. FIG. 4 is a diagram of two constraints according to an embodiment of this application. As shown in FIG. 4, a first constraint is that a mobile IAB-node, namely, a mobile relay device, is allowed to be directly connected to only a donor node (namely, an IAB donor), is allowed to perform only single-hop backhaul, and is not allowed to be connected to any other relay device (namely, an IAB-node). A second constraint is that multi-hop backhaul is allowed, but the mobile relay device is not allowed to access another mobile relay device, and is allowed to access only a fixed relay device or be directly connected to the donor node. It can be learned that it is extremely important to ensure access of the mobile relay device under the foregoing two constraints.

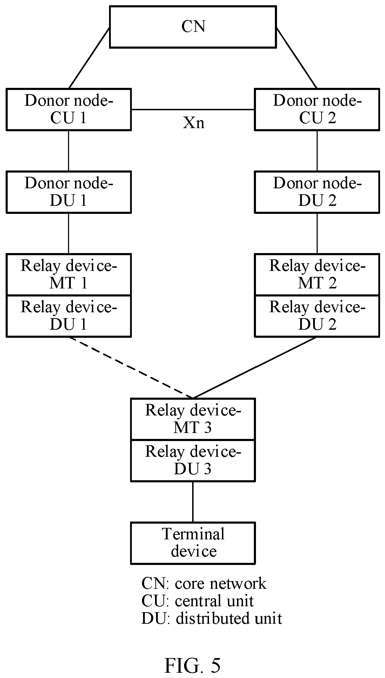

The relay device may migrate across a donor node-CU. For example, FIG. 5 is a diagram of cross-donor node-CU migration of a relay device according to an embodiment of this application. As shown in FIG. 5, a relay device-MT 3 is handed over from a cell of a relay device-DU 1 controlled by a donor node-CU 1 to a cell of a relay device-DU 2 controlled by a donor node-CU 2, and a relay device-DU 3 establishes a new F1 interface with the donor node-CU 2. In the Rel-17 standard, two CUs may exchange a handover request (HANDOVER REQUEST) message through an Xn interface. When a terminal device that is handed over is a relay device-MT, the HANDOVER REQUEST message carries an IAB-node indicator (IAB-node indicator) information element that indicates that the terminal device that is handed over is the relay device-MT. When the terminal device that is handed over is not the relay device-MT, that is, the terminal device is an ordinary terminal device, the HANDOVER REQUEST message does not carry the IAB-node indicator information element. Therefore, after receiving the HANDOVER REQUEST message, a donor node-CU may determine, depending on whether the HANDOVER REQUEST message carries the IAB-node indicator information element, whether to establish an F1 interface. When the HANDOVER REQUEST message carries the IAB-node indicator information element, it indicates that the relay device-MT is handed over, and the F1 interface may be established. When the HANDOVER REQUEST message does not carry the IAB-node indicator information element, it indicates that an ordinary terminal device is handed over, and the F1 interface does not need to be established.

In Rel-16, an IAB-support (IAB-support) information element is introduced into system information block (system information block, SIB) 1 system information of a cell, and indicates whether the cell allows IAB-MT access. Currently, the IAB-support information element cannot be for distinguishing between a mobile relay device and a fixed (fixed) relay device. In Rel-18, there may be a case in which access of a fixed relay device is allowed but access of a mobile relay device is not allowed. Therefore, it is extremely important to ensure normal access of the mobile relay device.

In view of this, embodiments of this application provide a communication method, to ensure normal access of a mobile relay device.

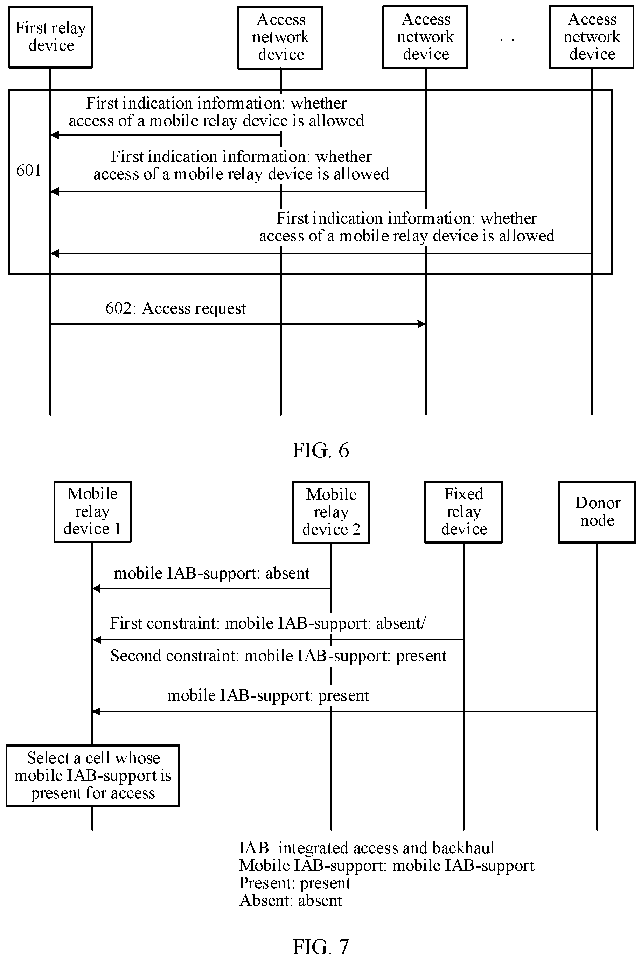

Based on the foregoing network architecture, FIG. 6 is a schematic flowchart of a communication method according to an embodiment of this application. As shown in FIG. 6, the communication method may include the following steps.

601: A plurality of access network devices separately send first indication information to a first relay device.

Correspondingly, the first relay device receives the plurality of pieces of first indication information from the plurality of access network devices.

The access network device may periodically broadcast the first indication information. Therefore, when the first relay device initially accesses an IAB network, and the first relay device is located within coverage of the plurality of access network devices, the plurality of access network devices may separately send the first indication information to the first relay device. In other words, the plurality of access network devices each send one piece of first indication information to the first relay device, and the first relay device receives the first indication information broadcast by each of the plurality of access network devices.

First indication information corresponding to a first access network device in the plurality of pieces of first indication information indicates whether the first access network device allows access of a mobile relay device. When the first access network device allows access of a mobile relay device, the first indication information corresponding to the first access network device indicates that the first access network device allows access of a mobile relay device. When the first access network device does not allow access of a mobile relay device, the first indication information corresponding to the first access network device indicates that the first access network device does not allow access of a mobile relay device. The first access network device is any one of the plurality of access network devices.

The first indication information may be carried in system information (system information, SI). In other words, the plurality of access network devices may broadcast corresponding first indication information to the first relay device via the system information. The system information may be a SIB 1 message, or may be a master information block (master information block, MIB) message, or may be any of a SIB 2 message to a SIB 21 message, or may be other system information. This is not limited herein.

The first indication information may include or carry an identifier of a corresponding access network device, or the system information may include or carry an identifier of an access network device that broadcasts the system information, so that the first relay device can determine, based on the identifier of the access network device, the access network device from which the first indication information comes. The identifier of the access network device may be a base station identity (gNB identity, gNB ID).

The first relay device may be a mobile relay device, or may be a fixed relay device. Each of the plurality of access network devices may be a donor node, a mobile relay device, or a fixed relay device.

602: When the first relay device is a mobile relay device, the first relay device sends an access request to a second access network device.

Correspondingly, the second access network device receives the access request from the first relay device.

After the first relay device receives the plurality of pieces of first indication information, when the first relay device is a mobile relay device, the first relay device may send the access request to the second access network device, that is, perform random access to the second access network device. A random access process is not described herein. The second access network device is an access network device that is in the plurality of access network devices and that allows access of a mobile relay device.

It should be understood that, when the access network device allows access of a mobile relay device, the access network device also allows access of a fixed relay device. Therefore, when the first relay device is a fixed relay device, the first relay device may also send the access request to the second access network device.

The first relay device may first select, from the plurality of access network devices based on the plurality of pieces of first indication information, an access network device that allows access of a mobile relay device. When a quantity of selected access network devices is 1, the first relay device may determine the access network device as the second access network device. The first relay device may then send the access request to the second access network device.

When the quantity of selected access network devices is M, in a case, the first relay device may determine any one of the M access network devices as the second access network device; in another case, the first relay device may first measure signal quality between the first relay device and each of the M access network devices, and then determine an access network device with highest signal quality in the M access network devices as the second access network device; in still another case, the first relay device may determine, as the second access network device, an access network device that is in the M access network devices and that is closest to the first relay device; or in yet another case, the first relay device may determine an access network device with smallest load in the M access network devices as the second access network device. The first relay device may then send the access request to the second access network device. M is an integer greater than or equal to 2.

Optionally, when the first relay device successfully accesses the second access network device, the second access network device may send second indication information to an AMF network element, and may send the second indication information to the AMF network element through an NG interface. Correspondingly, the AMF network element receives the second indication information from the second access network device. The second indication information indicates whether the first relay device is a mobile relay device, so that when the first relay device is a mobile relay device, an AMF network element supporting a mobile relay device can be found, and when the first relay device is a fixed relay device, an AMF network element supporting a fixed relay device can be found. Corresponding AMF network elements can be found for different types of relay devices, so that a core network can correctly provide services for the relay device.

### Embodiment 1

If the constraint is the first constraint, when the first access network device is a donor node, the first indication information corresponding to the first access network device may indicate that the first access network device allows access of a mobile relay device; or when the first access network device is a relay device, namely, a mobile relay device or a fixed relay device, the first indication information corresponding to the first access network device may indicate that the first access network device does not allow access of a mobile relay device. It can be learned that, when the constraint is the first constraint, only a donor node allows access of a mobile relay device, and neither a mobile relay device nor a fixed relay device allows access of a mobile relay device.

If the constraint is the second constraint, when the first access network device is a donor node or a fixed relay device, the first indication information corresponding to the first access network device may indicate that the first access network device allows access of a mobile relay device; or when the first access network device is a mobile relay device, the first indication information corresponding to the first access network device may indicate that the first access network device does not allow access of a mobile relay device.

The access network device may add a new information element to the system information, and the information element indicates whether the access network device allows access of a mobile relay device. The first indication information may be the information element. A name of the information element may be mobile IAB-support (mobile IAB-support), mobile IAB-banned (mobile IAB-banned, or mobile IAB-barred), or another name. This is not limited herein. It can be learned that the name of the information element is not limited, provided that the information element has the foregoing function.

For example, the information element may use present (present) to indicate that access of a mobile relay device is allowed, and may use absent (absent) to indicate that access of a mobile relay device is not allowed. For example, the information element may use support (support) to indicate that access of a mobile relay device is allowed, and may use not support (not support) to indicate that access of a mobile relay device is not allowed. For example, the information element may use true (true) to indicate that access of a mobile relay device is allowed, and may use false (false) to indicate that access of a mobile relay device is not allowed. For example, the information element may use "1" to indicate that access of a mobile relay device is allowed, and use "0" to indicate that access of a mobile relay device is not allowed; or may use "0" to indicate that access of a mobile relay device is allowed, and use "1" to indicate that access of a mobile relay device is not allowed. It should be understood that the foregoing is an example description of how the information element indicates, and does not limit a specific indication manner of the information element.

For example, FIG. 7 is a schematic flowchart of another communication method according to an embodiment of this application. As shown in FIG. 7, when a mobile relay device 1 initially accesses an IAB network and is located within coverage of a mobile relay device 2, a fixed relay device, and a donor node, the mobile relay device 1 may receive mobile IAB-support information elements broadcast by the mobile relay device 2, the fixed relay device, and the donor node. Regardless of whether the constraint is the first constraint or the second constraint, the mobile relay device 2 may use absent in the mobile IAB-support information element to indicate that the mobile relay device 2 does not allow access of a mobile relay device, and the donor node may use present in the mobile IAB-support information element to indicate that the donor node allows access of a mobile relay device. When the constraint is the first constraint, the fixed relay device may use absent in the mobile IAB-support information element to indicate that the fixed relay device does not allow access of a mobile relay device. When the constraint is the second constraint, the fixed relay device may use present in the mobile IAB-support information element to indicate that the fixed relay device allows access of a mobile relay device. It can be learned that, in a case of different constraints, information indicated by the fixed relay device by using the mobile IAB-support information element is different.

After receiving the mobile IAB-support information elements from the mobile relay device 2, the fixed relay device, and the donor node, the mobile relay device 1 may select, based on the mobile IAB-support information elements, a device that allows access of a mobile relay device from the mobile relay device 2, the fixed relay device, and the donor node. When the constraint is the first constraint, only the donor node allows access of a mobile relay device. Therefore, the mobile relay device 1 may send an access request to the donor node. When the constraint is the second constraint, both the fixed relay device and the donor node allow access of a mobile relay device, and the mobile relay device 1 may send an access request to the donor node, or may send an access request to the fixed relay device. Specifically, whether the access request is sent to the fixed relay device or the donor node is related to a selection manner of the mobile relay device 1. For a detailed description of the selection manner, refer to the related descriptions of selecting the second access network device from the M access network devices.

It should be understood that FIG. 7 is an example description of the communication method, and does not limit the communication method. For example, a name of the information element in FIG. 7 may be replaced with another name from mobile IAB-support. For another example, in FIG. 7, absent may be replaced with not support, false, 0, or the like, and present may be replaced with support, true, 1, or the like.

It can be learned that Embodiment 1 is applicable to the first constraint, and may also be applicable to the second constraint.

### Embodiment 2

The first indication information corresponding to the first access network device may indicate whether the first access network device is a relay device. When the first access network device is a donor node, the first indication information corresponding to the first access network device indicates that the first access network device is not a relay device. When the first access network device is a relay device, namely, a fixed relay device or a mobile relay device, the first indication information corresponding to the first access network device indicates that the first access network device is a relay device.

When the first indication information corresponding to the first access network device indicates that the first access network device is a relay device, the first relay device may determine that the first access network device does not allow access of a mobile relay device. When the first indication information corresponding to the first access network device indicates that the first access network device is a donor node, the first relay device may determine that the first access network device allows access of a mobile relay device.

The access network device may add a new information element to the system information, and the information element indicates whether the access network device is a relay device. The first indication information may be the information element. A name of the information element may be IAB-node indicator (IAB-node indicator), or may be another name. The name of the information element is not limited, provided that the information element has the foregoing function.

For example, the information element may use present to indicate that access is performed by a relay device, and may use absent to indicate that access is not performed by a relay device. For example, the information element may use support to indicate that access is performed by a relay device, and may use not support to indicate that access is not performed by a relay device. For example, the information element may use true to indicate that access is performed by a relay device, and may use false to indicate that access is not performed by a relay device. For example, the information element may use "1" to indicate that access is performed by a relay device, and use "0" to indicate that access is not performed by a relay device; or may use "0" to indicate that access is performed by a relay device, and use "1" to indicate that access is not performed by a relay device. It should be understood that the foregoing is an example description of how the information element indicates, and does not limit a specific indication manner of the information element.

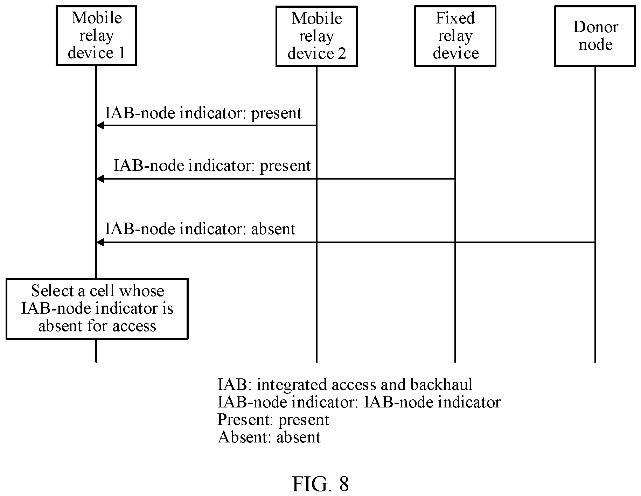

For example, FIG. 8 is a schematic flowchart of still another communication method according to an embodiment of this application. As shown in FIG. 8, when a mobile relay device 1 initially accesses an IAB network and is located within coverage of a mobile relay device 2, a fixed relay device, and a donor node, the mobile relay device 1 may receive IAB-node indicator information elements broadcast by the mobile relay device 2, the fixed relay device, and the donor node. The mobile relay device 2 and the fixed relay device may use present in the IAB-node indicator information elements to indicate that access is performed by a relay device, and the donor node may use absent in the IAB-node indicator information element to indicate that access is not performed by a relay device. After receiving the mobile IAB-support information elements from the mobile relay device 2, the fixed relay device, and the donor node, the mobile relay device 1 may select, based on the mobile IAB-support information elements, a donor node that allows access of a mobile relay device from the mobile relay device 2, the fixed relay device, and the donor node. The mobile relay device 1 may then send an access request to the donor node.

It should be understood that FIG. 8 is an example description of the communication method, and does not limit the communication method. For example, a name of the information element in FIG. 8 may be replaced with another name from mobile IAB-support. For another example, in FIG. 8, absent may be replaced with not support, false, 0, or the like, and present may be replaced with support, true, 1, or the like.

It should be understood that Embodiment 2 is applicable to the first constraint.

### Embodiment 3

The first indication information corresponding to the first access network device may indicate whether the first access network device is a mobile relay device. When the first access network device is a mobile relay device, the first indication information corresponding to the first access network device indicates that the first access network device is a mobile relay device. When the first access network device is a fixed relay device or a donor node, the first indication information corresponding to the first access network device indicates that the first access network device is not a mobile relay device.

When the first indication information corresponding to the first access network device indicates that the first access network device is a mobile relay device, the first relay device may determine that the first access network device does not allow access of a mobile relay device. When the first indication information corresponding to the first access network device indicates that the first access network device is not a mobile relay device, the first relay device may determine that the first access network device allows access of a mobile relay device.

The access network device may add a new information element to the system information, and the information element indicates whether the access network device is a mobile relay device. The first indication information may be the information element. A name of the information element may be mobile IAB type indicator (mobile IAB type indicator), or may be another name. The name of the information element is not limited, provided that the information element has the foregoing function.

For example, the information element may use present to indicate that access is performed by a mobile relay device, and may use absent to indicate that access is not performed by a mobile relay device. For example, the information element may use support to indicate that access is performed by a mobile relay device, and may use not support to indicate that access is not performed by a mobile relay device. For example, the information element may use true to indicate that access is performed by a mobile relay device, and may use false to indicate that access is not performed by a mobile relay device. For example, the information element may use "1 " to indicate that access is performed by a mobile relay device, and use "0" to indicate that access is not performed by a mobile relay device; or may use "0" to indicate access is performed by a mobile relay device, and use "1 " to indicate that access is not performed by a mobile relay device. It should be understood that the foregoing is an example description of how the information element indicates, and does not limit a specific indication manner of the information element.

In a VMR scenario, a terminal device on a vehicle may preferentially select a mobile relay device during initial access or handover. Correspondingly, a terminal device outside a vehicle may preferentially select a fixed relay device or a donor node during initial access or handover. Therefore, when it can be determined whether the terminal device is on a vehicle or outside a vehicle, the terminal device may select, based on a type of a relay device, a relay device or a donor node for access or handover.

It can be learned from the above that the access network device periodically broadcasts whether the access network device is a mobile relay device. Therefore, the terminal device may determine, based on information broadcast by the access network device, which access network devices are mobile relay devices and which access network devices are non-mobile relay devices. When the terminal device is located on a vehicle, the terminal device may first determine whether there is a mobile relay device whose signal quality is greater than a threshold among the mobile relay devices. When there is a mobile relay device whose signal quality is greater than the threshold among the mobile relay devices, the terminal device may select a mobile relay device with highest signal quality among the mobile relay devices for access or handover. The terminal device selects a device with highest signal quality from the non-mobile relay devices for access or handover only when there is no mobile relay device whose signal quality is greater than the threshold among the mobile relay devices.

When the terminal device is located outside a vehicle, the terminal device may first determine whether there is a device whose signal quality is greater than a threshold among the non-mobile relay devices. When there is a device whose signal quality is greater than the threshold among the non-mobile relay devices, the terminal device may select a device with highest signal quality for access or handover. The terminal device selects a device with highest signal quality from the mobile relay devices for access or handover only when there is no device whose signal quality is greater than the threshold among the non-mobile relay devices.

For example, the terminal device may determine an initial priority for an access network device based on a value of signal quality, and then determine a final priority based on whether the access network device is a mobile relay device. For example, for a terminal device on a vehicle, when an access network device is a mobile relay device, a final priority may be an initial priority plus a value or multiplied by a multiple greater than 1. When the access network device is not a mobile relay device, the final priority may be the initial priority minus a value or multiplied by a fraction less than 1. For a terminal device outside a vehicle, when an access network device is a mobile relay device, a final priority may be an initial priority minus a value or multiplied by a fraction less than 1. When the access network device is not a mobile relay device, the final priority may be the initial priority plus a value or multiplied by a multiple greater than 1. The terminal device preferentially selects an access network device with a high priority. When a plurality of access network devices have a same priority, the terminal device selects, based on signal quality, an access network device with optimal access signal quality.

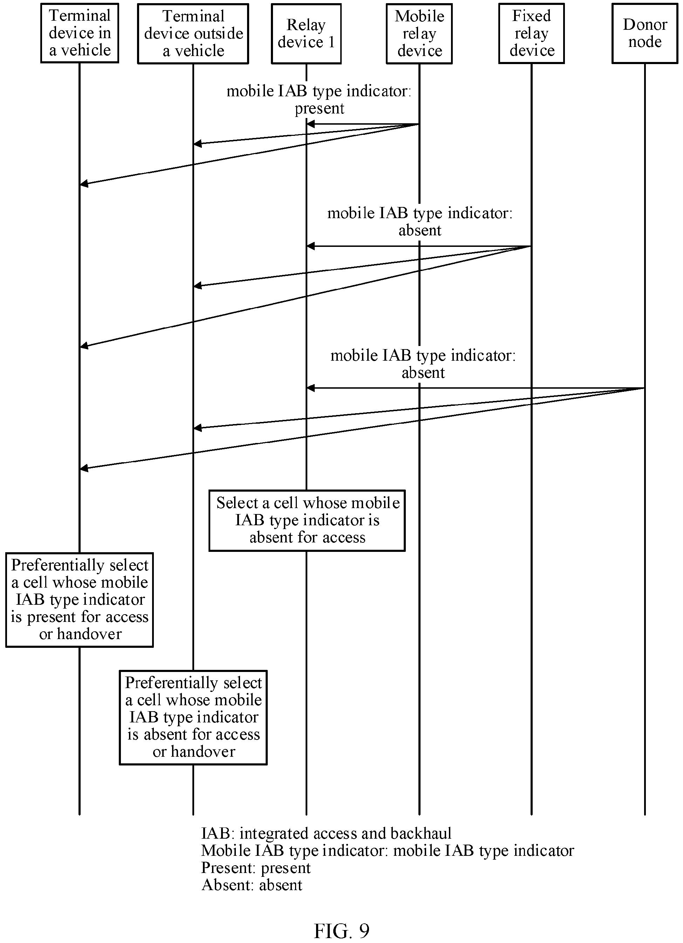

For example, FIG. 9 is a schematic flowchart of still another communication method according to an embodiment of this application. As shown in FIG. 9, when a relay device 1 initially accesses an IAB network, and a terminal device outside a vehicle and a terminal device on a vehicle initially access the IAB network (or are handed over in the IAB network) and are in coverage of a mobile relay device, a fixed relay device, and a donor node, the relay device 1, the terminal device outside the vehicle, and the terminal device on the vehicle may receive mobile IAB type indicator information elements broadcast by the mobile relay device, the fixed relay device, and the donor node. The mobile relay device may use present in the mobile IAB type indicator information element to indicate that the mobile relay device is a mobile relay device, and the fixed relay device and the donor node may use absent in the mobile IAB type indicator information elements to indicate that the fixed relay device and the donor node are not a mobile relay device. After receiving the mobile IAB type indicator information elements from the mobile relay device, the fixed relay device, and the donor node, the relay device 1 may select the donor node or the fixed relay device from the mobile relay device, the fixed relay device, and the donor node based on the mobile IAB type indicator information elements. The relay device 1 may then send an access request to the donor node or the fixed relay device. Specifically, whether the access request is sent to the fixed relay device or the donor node is related to a selection manner of the relay device 1. For a detailed description of the selection manner, refer to the related descriptions of selecting the second access network device from the M access network devices.

After receiving the mobile IAB type indicator information elements from the mobile relay device, the fixed relay device, and the donor node, the terminal device outside the vehicle may first perform selection from the fixed relay device and the donor node, that is, select a cell or a device whose mobile IAB type indicator information element is present. The mobile relay device is considered only when signal quality corresponding to the fixed relay device and signal quality corresponding to the donor node are both less than a threshold.

After receiving the mobile IAB type indicator information elements from the mobile relay device, the fixed relay device, and the donor node, the terminal device on the vehicle may first check the mobile relay device, that is, select a cell or a device whose mobile IAB type indicator information element is absent. Only when signal quality corresponding to the mobile relay device is less than the threshold, one of the fixed relay device and the donor node whose signal quality is greater than the threshold is selected for access.

It should be understood that FIG. 9 is an example description of the communication method, and does not limit the communication method. For example, a name of the information element in FIG. 9 may be replaced with another name from mobile IAB type indicator. For another example, in FIG. 9, absent may be replaced with not support, false, 0, or the like, and present may be replaced with support, true, 1, or the like.

It should be understood that Embodiment 3 is applicable to the second constraint.

### Embodiment 4

The first indication information corresponding to the first access network device may indicate whether the first access network device allows access of a relay device. When the first access network device is a mobile relay device, the first indication information corresponding to the first access network device indicates that the first access network device does not allow access of a relay device. When the first access network device is a fixed relay device or a donor node, the first indication information corresponding to the first access network device indicates that the first access network device allows access of a relay device.

When the first indication information corresponding to the first access network device indicates that the first access network device does not allow access of a relay device, the first relay device may determine that the first access network device does not allow access of a mobile relay device. When the first indication information corresponding to the first access network device indicates that the first access network device allows access of a relay device, the first relay device may determine that the first access network device allows access of a mobile relay device.

The access network device may indicate, by using an IAB-support (IAB-support) information element in system information, whether the access network device allows access of a relay device. The first indication information may be the information element. The information element may use present to indicate that access of a relay device is allowed, and may use absent to indicate that access of a relay device is not allowed. It can be learned that the existing information element can be used, and no additional information element needs to be specially added to the system information, so that compatibility with an existing protocol can be improved, and an amount of transmitted data can be reduced.

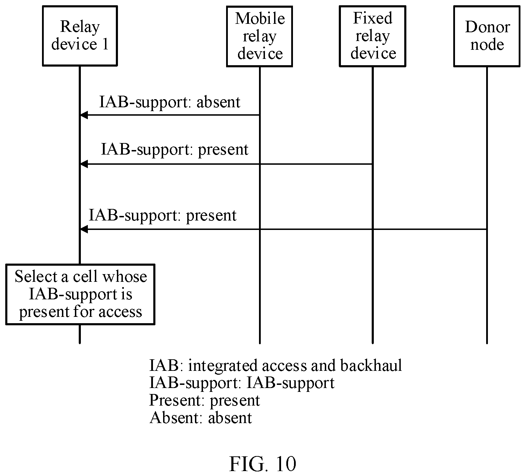

For example, FIG. 10 is a schematic flowchart of still another communication method according to an embodiment of this application. As shown in FIG. 10, when a relay device 1 initially accesses an IAB network and is located within coverage of a mobile relay device, a fixed relay device, and a donor node, the relay device 1 may receive IAB-support information elements broadcast by the mobile relay device, the fixed relay device, and the donor node. The mobile relay device may use absent in the IAB-support information element to indicate that access of a relay device is not allowed, and the fixed relay device and the donor node may use present in the IAB-support information elements to indicate that access of a relay device is allowed. After receiving the IAB-support information elements from the mobile relay device, the fixed relay device, and the donor node, the relay device 1 may select, based on the IAB-support information elements, the donor node or the fixed relay device from the mobile relay device, the fixed relay device, and the donor node for access. The relay device 1 may then send an access request to the donor node or the fixed relay device. Specifically, whether the access request is sent to the fixed relay device or the donor node is related to a selection manner of the relay device 1. For a detailed description of the selection manner, refer to the related descriptions of selecting the second access network device from the M access network devices.

It should be understood that Embodiment 4 is applicable to the second constraint.

It should be understood that Embodiment 1 to Embodiment 4 are four different implementations of the communication method corresponding to FIG. 6.

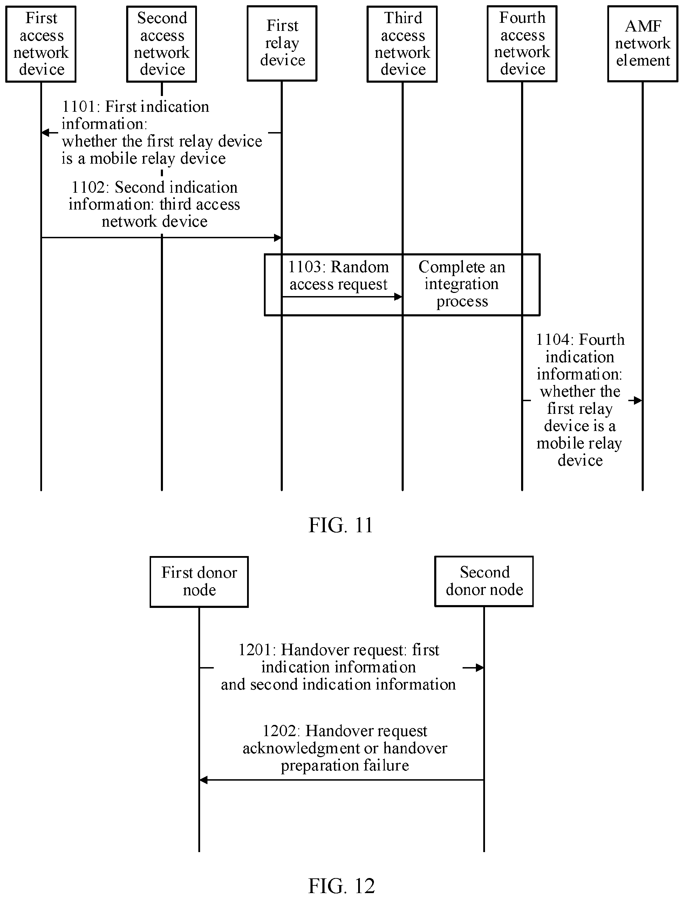

Based on the foregoing network architecture, FIG. 11 is a schematic flowchart of still another communication method according to an embodiment of this application. As shown in FIG. 11, the communication method may include the following steps.

1101: A first relay device sends first indication information to a first access network device.

Correspondingly, the first access network device receives the first indication information from the first relay device.

In an integration (integration) process of the first relay device, the first relay device may send the first indication information to the first access network device in a process of accessing a second access network device. The first relay device may first send the first indication information to the second access network device. After receiving the first indication information from the first relay device, the second access network device may send the first indication information to the first access network device. The second access network device is an access network device that is being accessed by the first relay device. The first access network device is a donor node corresponding to the second access network device, namely, a donor node that manages the first access network device. The second access network device may be a mobile relay device, or may be a fixed relay device. The first relay device is a relay device that initially accesses an IAB network. The first relay device may be a mobile relay device, or may be a fixed relay device.

The first indication information indicates whether the first relay device is a mobile relay device. When the first relay device is a mobile relay device, the first indication information indicates that the first relay device is a mobile relay device. When the first relay device is a fixed relay device, the first indication information indicates that the first relay device is not a mobile relay device.

For example, the first relay device may send the first indication information to the first access network device via a message 3 (message 3, msg3), a radio resource control (radio resource control, RRC) setup complete (RRC Setup Complete) message, or the like in a random access process. For example, the first relay device may add an information element, for example, a mobile IAB indication (mobile IAB indicator), to a message in the random access process such as the msg3 or the RRC Setup Complete message, to indicate whether the first relay device is a mobile relay device. The information element may use present to indicate that the first relay device is a mobile relay device, and may use absent to indicate that the first relay device is not a mobile relay device.

When initially accessing the IAB network, the first relay device may send random access to the second access network device. The second access network device may be an access network device with highest signal quality in access network devices that can cover the first relay device.

1102: When the second access network device does not allow access of the first relay device, the first access network device sends second indication information to the first relay device.

Correspondingly, the first relay device receives the second indication information from the first access network device.

After receiving the first indication information, the first access network device may first determine whether the second access network device allows access of the first relay device. When determining that the second access network device does not allow access of the first relay device, the first access network device may send the second indication information to the first relay device. When determining that the second access network device allows access of the first relay device, the first access network device may not perform processing, and the first relay device and the second access network device may continue to complete remaining steps of the random access process.

In a case, when the first indication information indicates that the first relay device is a mobile relay device, and the second access network device does not allow access of a mobile relay device, the first access network device may determine that the second access network device does not allow access of the first relay device. When the second access network device is a mobile relay device, the second access network device does not allow access of a mobile relay device. If a constraint is the first constraint, when the second access network device is a fixed relay device, the second access network device does not allow access of a mobile relay device.

When the first indication information indicates that the first relay device is a fixed relay device, and the second access network device is a mobile relay device, the first access network device may determine that the second access network device does not allow access of the first relay device.

In another case, the first access network device may first determine a type of the second access network device. The type of the second access network device may be a mobile relay device, or may be a fixed relay device. When the second access network device is a mobile relay device, regardless of whether the constraint is the first constraint or the second constraint, or whether the first relay device is a fixed relay device or a mobile relay device, the second access network device does not allow access of the first relay device.

When the second access network device is a fixed relay device, if the constraint is the first constraint, that is, the fixed relay device does not allow access of a mobile relay device, and the first indication information indicates that the first relay device is a mobile relay device, the first access network device may determine that the second access network device does not allow access of the first relay device.

When the second access network device is a fixed relay device, if the constraint is the second constraint, regardless of whether the first indication information indicates that the first relay device is a mobile relay device or not a mobile relay device (namely, a fixed relay device), the first access network device may determine that the second access network device allows access of the first relay device.

The second indication information may indicate that the second access network device does not allow access of the first relay device, the second indication information may further indicate a third access network device, and the third access network device is an access network device that allows access of the first relay device. In other words, after determining that the second access network device does not allow access of the first relay device, the first access network device may redirect the first relay device to the third access network device. In addition, access of the first relay device to the second access network device can be further released. The second indication information may include an identifier of the third access network device, and the identifier of the third access network device indicates the third access network device.

In a case, the first access network device is a donor node-CU, and the second access network device is a donor node-DU. In other words, the first access network device and the second access network device may be respectively a CU part and a DU part of the donor node. In this case, the second access network device allows access of the first relay device, the first access network device may not perform other processing, and the second access network device and the first relay device may continue to complete remaining steps of the random access process.

Optionally, a fourth access network device may send third indication information to the first access network device. Correspondingly, the first access network device receives the third indication information from the fourth access network device. The third indication information may indicate an access network device that allows access of a relay device, or may indicate an access network device that allows access of a mobile relay device. The access network device indicated by the third indication information may include the third access network device. The fourth access network device is a donor node corresponding to the third access network device. It can be learned that different donor nodes can pre-interact with access network devices that allow access of a relay device or a mobile relay device and that are in access network devices respectively managed by the donor nodes, so that the access network devices that allow access of a relay device or a mobile relay device do not need to be obtained during redirection. This can improve redirection efficiency.

The third access network device and the fourth access network device may be independent access network devices. In this case, the third access network device is a fixed relay device managed by the fourth access network device. The third access network device and the fourth access network device may alternatively be device parts. In this case, the third access network device may be the DU part of the donor node, and the fourth access network device may be the CU part of the donor node.

1103: The first relay device sends a random access request to the third access network device.

Correspondingly, the third access network device receives the random access request from the first relay device.

After receiving the second indication information from the first access network device, the first relay device may send the random access request to the third access network device indicated by the second indication information, and complete remaining steps of an integration process of the first relay device.

1104: When the first relay device successfully accesses the third access network device, the fourth access network device sends fourth indication information to an AMF network element.

Correspondingly, the AMF network element receives the fourth indication information from the fourth access network device.

After determining that the first relay device successfully accesses the third access network device, the fourth access network device may send the fourth indication information to the AMF network element, and may send the fourth indication information to the AMF network element through an NG interface. That the fourth access network device determines that the first relay device successfully accesses the third access network device may be that the third access network device sends, to the fourth access network device, information indicating successful access of the first relay device, or may be that the fourth access network device detects that the first relay device successfully accesses the third access network device.

The fourth indication information indicates whether the first relay device is a mobile relay device, so that when the first relay device is a mobile relay device, an AMF network element supporting a mobile relay device can be found, and when the first relay device is a fixed relay device, an AMF network element supporting a fixed relay device can be found. Corresponding AMF network elements can be found for different relay devices, so that flexibility of a core network can be improved.

Based on the foregoing network architecture, FIG. 12 is a schematic flowchart of still another communication method according to an embodiment of this application. As shown in FIG. 12, the communication method may include the following steps.

1201: A first donor node sends a handover request to a second donor node.

Correspondingly, the second donor node receives the handover request from the first donor node.

When a first relay device managed by the first donor node is handed over, the first donor node may send a handover request (HANDOVER REQUEST) message to the second donor node. The first relay device is a relay device that is being handed over, and may be a mobile relay device or a fixed relay device. The first donor node is a donor node corresponding to a second access network device. The second access network device is a source access network device from which the first relay device is handed over, namely, a parent node of the first relay device before handover. The second donor node is a donor node corresponding to a first access network device, and the first access network device is a target access network device to which the first relay device is handed over.

The handover request may include first indication information and second indication information, and the first indication information may indicate whether the first relay device is a mobile relay device. When the first relay device is a mobile relay device, the first indication information may indicate that the first relay device is a mobile relay device. When the first relay device is a fixed relay device, the first indication information may indicate that the first relay device is not a mobile relay device.

The second indication information indicates the first access network device, and indicates an access network device to which the terminal is handed over. The second indication information may be an identifier of the second access network device.

In a case, the first donor node may include a mobile IAB-node indicator (mobile IAB-node indicator) information element in the HANDOVER REQUEST message. The information element may indicate whether a relay device that is handed over or migrated is a mobile relay device, that is, indicate whether the first relay device is a mobile relay device. The first indication information may be the information element.

For example, the information element may use present to indicate that access is performed by a mobile relay device, and may use absent to indicate that access is not performed by a mobile relay device. For example, the information element may use support to indicate that access is performed by a mobile relay device, and may use not support to indicate that access is not performed by a mobile relay device. For example, the information element may use true to indicate that access is performed by a mobile relay device, and may use false to indicate that access is not performed by a mobile relay device. For example, the information element may use "1 " to indicate that access is performed by a mobile relay device, and use "0" to indicate that access is not performed by a mobile relay device; or may use "0" to indicate that access is performed by a mobile relay device, and use "1 " to indicate that access is not performed by a mobile relay device. It should be understood that the foregoing is an example description of how the information element indicates, and does not limit a specific indication manner of the information element.

In another case, when the first relay device is a mobile relay device, the first donor node may include a mobile IAB-node indicator (mobile IAB-node indicator) information element in the HANDOVER REQUEST message. The information element may indicate that a relay device that is handed over or migrated is a mobile relay device, that is, indicate that the first relay device is a mobile relay device. The first indication information may be the information element. When the first relay device is a fixed relay device, the first donor node may not include the mobile IAB-node indicator information element in the HANDOVER REQUEST message, and may implicitly indicate that the first relay device is not a mobile relay device. It can be learned that whether the first relay device is a mobile relay device may be indicated by whether the HANDOVER REQUEST message carries the mobile IAB-node indicator information element. When the mobile IAB-node indicator information element is carried, the first relay device is indicated as a mobile relay device; or when the mobile IAB-node indicator information element is not carried, the first relay device is indicated as a non-mobile relay device.

In a case, the second access network device may be a DU part of the first donor node.

In a case, the first access network device may be a DU part of the second donor node.

1202: The second donor node sends a handover request acknowledgment or a handover preparation failure to the first donor node based on the first indication information.

Correspondingly, the first donor node receives the handover request acknowledgment or the handover preparation failure from the second donor node.

After receiving the handover request, the second donor node may send the handover request acknowledgment or the handover preparation failure to the first donor node based on the first indication information. The first donor node may send a handover preparation failure (HANDOVER PREPARATION FAILURE) message to the first donor node when the first indication information indicates that the first relay device is a mobile relay device and the first access network device does not allow access of a mobile relay device, or when the first indication information indicates that the first relay device is a fixed relay device and the first access network device is a mobile relay device. The first donor node may send a handover request acknowledgment (acknowledge, ACK) (HANDOVER REQEUST ACK) message to the first donor node when the first indication information indicates that the first relay device is a mobile relay device and the first access network device allows access of a mobile relay device, or when the first indication information indicates that the first relay device is a fixed relay device and the first access network device is a fixed relay device or a donor node.

When the first access network device is a mobile relay device, the first access network device does not allow access of a mobile relay device or a fixed relay device.

When the first access network device is a fixed relay device, if a constraint is the first constraint, the first access network device does not allow access of a mobile relay device; or if the constraint is the second constraint, the first access network device allows access of a mobile relay device. When the first access network device is a fixed relay device, the first access network device allows access of a fixed relay device.

When the first access network device is a donor node, the first access network device allows access of a mobile relay device and also allows access of a fixed relay device.

The handover request acknowledgment may indicate that the first access network device allows access of the first relay device. The handover preparation failure may indicate that the first access network device does not allow access of the first relay device. For example, the handover preparation failure message may include a failure cause. When the first relay device is a mobile relay device, the failure cause indicates that the first access network device does not allow access of a mobile relay device.

It should be understood that the relay device (mobile relay device or fixed relay device) in the foregoing communication method may alternatively be a chip, a chip system, or a processor that supports the relay device in implementing the method, or may be a logical module or software that can implement all or some functions of the relay device. The access network device in the foregoing communication method may alternatively be a chip, a chip system, or a processor that supports the access network device in implementing the method, or may be a logical module or software that can implement all or some functions of the access network device. The donor node in the foregoing communication method may alternatively be a chip, a chip system, or a processor that supports the access network device in implementing the method, or may be a logical module or software that can implement all or some functions of the access network device.

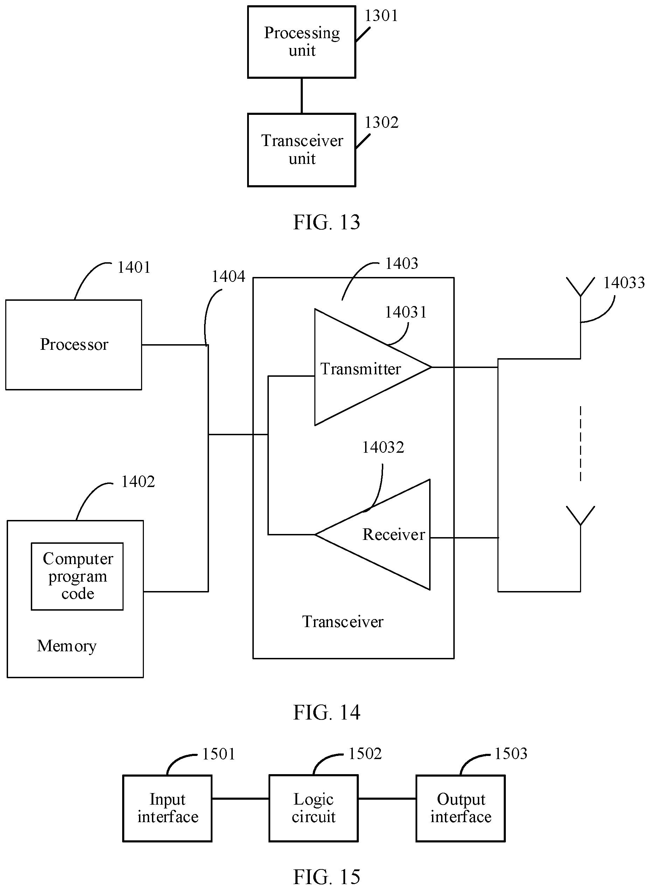

Based on the foregoing network architecture, refer to FIG. 13. FIG. 13 is a diagram of a structure of a communication apparatus according to an embodiment of this application. As shown in FIG. 13, the communication apparatus may include a processing unit 1301 and a transceiver unit 1302.

In a case, the communication apparatus may be the first access network device, or may be a chip, a chip system, or a processor that supports the first access network device in implementing the method, or may be a logical module or software that can implement all or some functions of the first access network device.

The transceiver unit 1302 is configured to send, under control of the processing unit 1301, first indication information to a first relay device, where the first indication information indicates whether access of a mobile relay device is allowed, and the first relay device is a relay device that initially accesses a network.

In an embodiment, when the first access network device is a donor node, the first indication information indicates that access of a mobile relay device is allowed; or when the first access network device is a relay device, the first indication information indicates that access of a mobile relay device is not allowed.

In an embodiment, when the first access network device is a donor node or a fixed relay device, the first indication information indicates that access of a mobile relay device is allowed; or when the first access network device is a mobile relay device, the first indication information indicates that access of a mobile relay device is not allowed.

In an embodiment, that the first indication information indicates whether access of a mobile relay device is allowed may include: The first indication information indicates whether the first access network device is a relay device.

In an embodiment, that the first indication information indicates whether the first access network device is a relay device may include:
when the first access network device is a donor node, the first indication information indicates that the first access network device is not a relay device; or
when the first access network device is a relay device, the first indication information indicates that the first access network device is a relay device.

In an embodiment, that the first indication information indicates whether access of a mobile relay device is allowed may include: The first indication information indicates whether the first access network device is a mobile relay device.

In an embodiment, that the first indication information indicates whether access of a mobile relay device is allowed may include: The first indication information indicates whether access of a relay device is allowed.

In an embodiment, that the first indication information indicates whether access of a relay device is allowed may include:
when the first access network device is a mobile relay device, the first indication information indicates that access of a relay device is not allowed; or
when the first access network device is a fixed relay device or a donor node, the first indication information indicates that access of a relay device is allowed.

In an embodiment, the transceiver unit 1302 is further configured to receive, under control of the processing unit 1301, an access request from the first relay device when the first indication information indicates that access of a mobile relay device is allowed.

In an embodiment, the transceiver unit 1302 is further configured to send, under control of the processing unit 1301, second indication information to an AMF network element, where the second indication information indicates whether the first relay device is a mobile relay device.

In a possible implementation, the first indication information is carried in system information.

For more detailed descriptions of the processing unit 1301 and the transceiver unit 1302, directly refer to the method embodiments shown in FIG. 6 and the related descriptions of the first access network device in Embodiment 1 to Embodiment 4. Details are not described herein again.

In another case, the communication apparatus may be the first relay device, or may be a chip, a chip system, or a processor that supports the first relay device in implementing the method, or may be a logical module or software that can implement all or some functions of the first relay device.

The transceiver unit 1302 is configured to receive, under control of the processing unit 1301, a plurality of pieces of first indication information from a plurality of access network devices, where first indication information corresponding to a first access network device in the plurality of pieces of first indication information indicates whether the first access network device allows access of a mobile relay device, and the first access network device is any one of the plurality of access network devices.

The transceiver unit 1302 is further configured to send, under control of the processing unit 1301, an access request to a second access network device when the first relay device is a mobile relay device, where the second access network device is an access network device that is in the plurality of access network devices and that allows access of a mobile relay device.

In an embodiment, when the first access network device is a donor node, the first indication information corresponding to the first access network device indicates that the first access network device allows access of a mobile relay device; or when the first access network device is a relay device, the first indication information corresponding to the first access network device indicates that the first access network device does not allow access of a mobile relay device.

In an embodiment, when the first access network device is a donor node or a fixed relay device, the first indication information corresponding to the first access network device indicates that the first access network device allows access of a mobile relay device; or when the first access network device is a mobile relay device, the first indication information corresponding to the first access network device indicates that the first access network device does not allow access of a mobile relay device.

In an embodiment, that first indication information corresponding to a first access network device indicates whether the first access network device allows access of a mobile relay device may include: The first indication information corresponding to the first access network device indicates whether the first access network device is a relay device; and when the first indication information indicates that the first access network device is a relay device, it is determined that the first access network device does not allow access of a mobile relay device; or when the first indication information indicates that the first access network device is not a relay device, it is determined that the first access network device allows access of a mobile relay device.

In an embodiment, that the first indication information corresponding to the first access network device indicates whether the first access network device is a relay device may include:
when the first access network device is a donor node, the first indication information corresponding to the first access network device indicates that the first access network device is not a relay device; or
when the first access network device is a relay device, the first indication information corresponding to the first access network device indicates that the first access network device is a relay device.

In an embodiment, that first indication information corresponding to a first access network device indicates whether the first access network device allows access of a mobile relay device may include: The first indication information corresponding to the first access network device indicates whether the first access network device is a mobile relay device; and when the first indication information indicates that the first access network device is a mobile relay device, it is determined that the first access network device does not allow access of a relay device; or when the first indication information indicates that the first access network device is not a mobile relay device, it is determined that the first access network device allows access of a relay device.

In an embodiment, that first indication information corresponding to a first access network device indicates whether the first access network device allows access of a mobile relay device may include: The first indication information corresponding to the first access network device indicates whether the first access network device allows access of a relay device.

In an embodiment, that the first indication information corresponding to the first access network device indicates whether the first access network device allows access of a relay device may include:
when the first access network device is a mobile relay device, the first indication information corresponding to the first access network device indicates that the first access network device does not allow access of a relay device; or
when the first access network device is a fixed relay device or a donor node, the first indication information corresponding to the first access network device indicates that the first access network device allows access of a relay device.

In an embodiment, the first indication information is carried in system information.

For more detailed descriptions of the processing unit 1301 and the transceiver unit 1302, directly refer to the method embodiments shown in FIG. 6 and the related descriptions of the first relay device in Embodiment 1 to Embodiment 4. Details are not described herein again.

In still another case, the communication apparatus may be the first relay device, or may be a chip, a chip system, or a processor that supports the first relay device in implementing the method, or may be a logical module or software that can implement all or some functions of the first relay device.

The transceiver unit 1302 is configured to send, under control of the processing unit 1301, first indication information to a first access network device, where the first indication information indicates whether the first relay device is a mobile relay device, and the first access network device is a donor node corresponding to a second access network device that is being accessed by the first relay device.

The transceiver unit 1302 is further configured to receive, under control of the processing unit 1301, second indication information from the first access network device, where the second indication information indicates that the second access network device does not allow access of the first relay device, the second indication information further indicates a third access network device, and the third access network device is an access network device that allows access of the first relay device.

The transceiver unit 1302 is further configured to send, under control of the processing unit 1301, a random access request to the third access network device.

For more detailed descriptions of the processing unit 1301 and the transceiver unit 1302, directly refer to the related descriptions of the first relay device in the method embodiments shown in FIG. 11. Details are not described herein again.

In still another case, the communication apparatus may be the first access network device, or may be a chip, a chip system, or a processor that supports the first access network device in implementing the method, or may be a logical module or software that can implement all or some functions of the first access network device.

The transceiver unit 1302 is configured to receive, under control of the processing unit 1301, first indication information from a first relay device, where the first indication information indicates whether the first relay device is a mobile relay device, and the first relay device is a relay device that initially accesses a network.

The transceiver unit 1302 is further configured to send, under control of the processing unit 1301, second indication information to the first relay device when a second access network device does not allow access of the first relay device, where the second access network device is an access network device that is being accessed by the first relay device, the first access network device is a donor node corresponding to the second access network device, the second indication information indicates that the second access network device does not allow access of the first relay device, the second indication information further indicates a third access network device, and the third access network device is an access network device that allows access of the first relay device.

In an embodiment, the processing unit 1301 is configured to:
when the first indication information indicates that the first relay device is a mobile relay device, and the second access network device does not allow access of a mobile relay device, determine that the second access network device does not allow access of the first relay device; or
when the first indication information indicates that the first relay device is a fixed relay device, and the second access network device is a mobile relay device, determine that the second access network device does not allow access of the first relay device.

In an embodiment, the transceiver unit 1302 is further configured to receive, under control of the processing unit 1301, third indication information from a fourth access network device, where the third indication information indicates an access network device that allows access of a relay device or indicates an access network device that allows access of a mobile relay device, the fourth access network device is a donor node corresponding to the third access network device, and the access network device indicated by the third indication information includes the third access network device.

For more detailed descriptions of the processing unit 1301 and the transceiver unit 1302, directly refer to the related descriptions of the first access network device in the method embodiments shown in FIG. 11. Details are not described herein again.

In still another case, the communication apparatus may be the fourth access network device, or may be a chip, a chip system, or a processor that supports the fourth access network device in implementing the method, or may be a logical module or software that can implement all or some functions of the fourth access network device.

The transceiver unit 1302 is configured to send, under control of the processing unit 1301, fourth indication information to an AMF network element when a first relay device successfully accesses a third access network device, where the fourth indication information indicates whether the first relay device is a mobile relay device, the first relay device is a relay device that initially accesses a network, and the third access network device is an access network device managed by the fourth access network device.

In an embodiment, the transceiver unit 1302 is further configured to send, under control of the processing unit 1301, third indication information to a first access network device, where the third indication information indicates an access network device that allows access of a relay device or indicates an access network device that allows access of a mobile relay device, and the access network device indicated by the third indication information includes the third access network device.

For more detailed descriptions of the processing unit 1301 and the transceiver unit 1302, directly refer to the related descriptions of the fourth access network device in the method embodiments shown in FIG. 11. Details are not described herein again.

In still another case, the communication apparatus may be the first donor node, or may be a chip, a chip system, or a processor that supports the first donor node in implementing the method, or may be a logical module or software that can implement all or some functions of the first donor node.

The transceiver unit 1302 is configured to send, under control of the processing unit 1301, a handover request to a second donor node, where the handover request includes first indication information and second indication information, the first indication information indicates whether a first relay device is a mobile relay device, the first relay device is a to-be-handed-over relay device, the second indication information indicates a first access network device, the first access network device is a target access network device to which the first relay device is handed over, the first donor node is a donor node corresponding to a second access network device, the second access network device is a source access network device from which the first relay device is handed over, and the second donor node is a donor node corresponding to the first access network device.

The transceiver unit 1302 is further configured to receive, under control of the processing unit 1301, a handover request acknowledgment or a handover preparation failure from the second donor node, where the handover request acknowledgment indicates that the first access network device allows access of the first relay device, and the handover preparation failure indicates that the first access network device does not allow access of the first relay device.

For more detailed descriptions of the processing unit 1301 and the transceiver unit 1302, directly refer to the related descriptions of the first donor node in the method embodiments shown in FIG. 12. Details are not described herein again.

In still another case, the communication apparatus may be the second donor node, or may be a chip, a chip system, or a processor that supports the second donor node in implementing the method, or may be a logical module or software that can implement all or some functions of the second donor node.

The transceiver unit 1302 is configured to receive, under control of the processing unit 1301, a handover request from a first donor node, where the handover request includes first indication information and second indication information, the first indication information indicates whether a first relay device is a mobile relay device, the first relay device is a to-be-handed-over relay device, the second indication information indicates a first access network device, the first access network device is a target access network device to which the first relay device is handed over, the first donor node is a donor node corresponding to a second access network device, the second access network device is a source access network device from which the first relay device is handed over, and the second donor node is a donor node corresponding to the first access network device.

The transceiver unit 1302 is further configured to send, under control of the processing unit 1301, a handover request acknowledgment or a handover preparation failure to the first donor node based on the first indication information, where the handover request acknowledgment indicates that the first access network device allows access of the first relay device, and the handover preparation failure indicates that the first access network device does not allow access of the first relay device.

In an embodiment, that the transceiver unit 1302 sends a handover request acknowledgment or a handover preparation failure to the first donor node based on the first indication information may include:

The second donor node sends the handover preparation failure to the first donor node when the first indication information indicates that the first relay device is a mobile relay device and the first access network device does not allow access of a mobile relay device, or when the first indication information indicates that the first relay device is a fixed relay device and the first access network device is a mobile relay device.

The second donor node sends the handover request acknowledgment to the first donor node when the first indication information indicates that the first relay device is a mobile relay device and the first access network device allows access of a mobile relay device, or when the first indication information indicates that the first relay device is a fixed relay device and the first access network device is a fixed relay device or a donor node.

For more detailed descriptions of the processing unit 1301 and the transceiver unit 1302, directly refer to the related descriptions of the second donor node in the method embodiments shown in FIG. 12. Details are not described herein again.

Based on the foregoing network architecture, refer to FIG. 14. FIG. 14 is a diagram of a structure of another communication apparatus according to an embodiment of this application. As shown in FIG. 14, the communication apparatus may include a processor 1401, a memory 1402, a transceiver 1403, and a bus 1404. The memory 1402 may exist independently, and may be connected to the processor 1401 through the bus 1404. Alternatively, the memory 1402 may be integrated with the processor 1401. The bus 1404 is configured to implement connections between these components. In a case, as shown in FIG. 14, the transceiver 1403 may include a transmitter 14031, a receiver 14032, and an antenna 14033. In another case, the transceiver 1403 may include a transmitter (namely, an output interface) and a receiver (namely, an input interface). The transmitter may include a transmitter and an antenna, and the receiver may include a receiver and an antenna.

When computer program instructions stored in the memory 1402 are executed, the processor 1401 is configured to perform the operations performed by the processing unit 1301 in the foregoing embodiments, and the transceiver 1403 is configured to perform the operations performed by the transceiver unit 1302 in the foregoing embodiments.

In a case, the communication apparatus may be the first access network device, or may be a module in the first access network device. The communication apparatus may be further configured to perform the method embodiments shown in FIG. 6 and the methods performed by the first access network device in Embodiment 1 to Embodiment 4. Details are not described again.

In another case, the communication apparatus may be the first relay device, or may be a module in the first relay device. The communication apparatus may be further configured to perform the method embodiments shown in FIG. 6 and the methods performed by the first relay device in Embodiment 1 to Embodiment 4. Details are not described again.

In still another case, the communication apparatus may be the first relay device, or may be a module in the first relay device. The communication apparatus may be further configured to perform the methods performed by the first relay device in the method embodiments shown in FIG. 11. Details are not described again.

In still another case, the communication apparatus may be the first access network device, or may be a module in the first access network device. The communication apparatus may be further configured to perform the methods performed by the first access network device in the method embodiments shown in FIG. 11. Details are not described again.

In still another case, the communication apparatus may be the fourth access network device, or may be a module in the fourth access network device. The communication apparatus may be further configured to perform the methods performed by the fourth access network device in the method embodiments shown in FIG. 11. Details are not described again.

In still another case, the communication apparatus may be the first donor node, or may be a module in the first donor node. The communication apparatus may be further configured to perform the methods performed by the first donor node in the method embodiments shown in FIG. 12. Details are not described again.

In still another case, the communication apparatus may be the second donor node, or may be a module in the second donor node. The communication apparatus may be further configured to perform the methods performed by the second donor node in the method embodiments shown in FIG. 12. Details are not described again.

Based on the foregoing network architecture, refer to FIG. 15. FIG. 15 is a diagram of a structure of still another communication apparatus according to an embodiment of this application. As shown in FIG. 15, the communication apparatus may include an input interface 1501, a logic circuit 1502, and an output interface 1503. The input interface 1501 is connected to the output interface 1503 through the logic circuit 1502. The input interface 1501 is configured to receive information from another communication apparatus, and the output interface 1503 is configured to output, schedule, or send information to the another communication apparatus. The logic circuit 1502 is configured to perform an operation other than operations of the input interface 1501 and the output interface 1503, for example, implement a function implemented by the processor 1401 in the foregoing embodiments. The communication apparatus may be the first access network device (or a module in the first access network device), or may be the first relay device (or a module in the first relay device), or may be the fourth access network device (or a module in the fourth access network device), or may be the first donor node (or a module in the first donor node), or may be the second donor node (or a module in the second donor node). For more detailed descriptions of the input interface 1501, the logic circuit 1502, and the output interface 1503, directly refer to the related descriptions of the first access network device, the first relay device, the fourth access network device, the first donor node, or the second donor node in the foregoing method embodiments. Details are not described herein again.

It should be understood that the foregoing modules may be independent of each other, or may be integrated. For example, a transmitter, a receiver, and an antenna may be independent of each other, or may be integrated into a transceiver. For another example, an input interface and an output interface may be independent of each other, or may be integrated into a communication interface.

An embodiment of this application further discloses a computer-readable storage medium storing instructions. When the instructions are executed by a processor, the methods in the foregoing method embodiments are performed.

An embodiment of this application further discloses a computer program product including computer instructions. When the computer instructions are executed by a processor, the methods in the foregoing method embodiments are performed.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

It is clear that the embodiments described above are merely some but not all of embodiments of this application. "Embodiment" mentioned in the specification means that a particular feature, structure, or characteristic described with reference to embodiments may be included in at least one of embodiments of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments. All other embodiments obtained by a person of ordinary skill in the art based on embodiments of this application without creative efforts shall fall within the protection scope of this application.

In the specification, claims, and accompanying drawings of this application, the terms "first", "second", "third", and the like are used to distinguish between different objects but do not indicate a particular order. In addition, terms such as "include" and "have" and any other variants thereof are intended to cover a non-exclusive inclusion. For example, a series of steps or units are included; optionally, a step or unit that is not listed is further included; or optionally, another inherent step or unit of the process, the method, the product, or the device is further included.

The accompanying drawings show only a part rather than all content related to this application. Before example embodiments are discussed in more detail, it should be mentioned that some example embodiments are described as processing or methods depicted as flowcharts. Although the flowchart describes operations (or steps) as sequential processing, many of the operations can be implemented in parallel, concurrently, or simultaneously. In addition, the sequence of the operations may be rearranged. The processing may be terminated upon completion of its operation, but may further have additional steps not included in the accompanying drawings.

Terms such as "unit" used in this specification indicate computer-related entities, hardware, firmware, combinations of hardware and software, software, or software being executed. For example, a unit may be, but is not limited to, a process running on a processor, a processor, an object, an executable file, an execution thread, or a program, and/or may be distributed between two or more computers. In addition, these units may be executed from various computer-readable media storing various data structures. For example, the units may communicate with each other based on signals of one or more data packets (for example, second unit data exchanged with a local system, a distributed system, and/or another unit between networks such as an internet interacting with another system through signals) by using a local and/or remote process.

In addition, in embodiments of this application, unless otherwise specified, a quantity of nouns represents "a singular noun or plural nouns", that is, "one or more". "At least one" means one or more, "a plurality of" means two or more, and "more" in "one or more" means two or more. The term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c represents: a, b, c, a and b, a and c, b and c, or a, b, and c, where a, b, and c may be singular or plural.

## Claims

1. A communication method, wherein the method is applied to a first access network device, and comprises:
sending first indication information to a first relay device, wherein the first indication information indicates whether access of a mobile relay device is allowed, and the first relay device is a relay device that initially accesses a network.

2. The method according to claim 1, wherein when the first access network device is a donor node, the first indication information indicates that access of a mobile relay device is allowed; or when the first access network device is a relay device, the first indication information indicates that access of a mobile relay device is not allowed.

3. The method according to claim 1, wherein when the first access network device is a donor node or a fixed relay device, the first indication information indicates that access of a mobile relay device is allowed; or when the first access network device is a mobile relay device, the first indication information indicates that access of a mobile relay device is not allowed.

4. The method according to claim 1, wherein that the first indication information indicates whether access of a mobile relay device is allowed comprises: the first indication information indicates whether the first access network device is a mobile relay device.

5. The method according to claim 1, wherein when the first indication information indicates that access of a mobile relay device is allowed, the method further comprises:
receiving an access request from the first relay device.

6. The method according to claim 5, wherein the method further comprises:
sending second indication information to an access and mobility management function AMF network element, wherein the second indication information indicates whether the first relay device is a mobile relay device.

7. A communication method, wherein the method is applied to a first relay device, the first relay device is a relay device that initially accesses a network, and the method comprises:
receiving a plurality of pieces of first indication information from a plurality of access network devices, wherein first indication information corresponding to a first access network device in the plurality of pieces of first indication information indicates whether the first access network device allows access of a mobile relay device, and the first access network device is any one of the plurality of access network devices; and
sending an access request to a second access network device when the first relay device is a mobile relay device, wherein the second access network device is an access network device that is in the plurality of access network devices and that allows access of a mobile relay device.

8. The method according to claim 7, wherein when the first access network device is a donor node, the first indication information corresponding to the first access network device indicates that the first access network device allows access of a mobile relay device; or when the first access network device is a relay device, the first indication information corresponding to the first access network device indicates that the first access network device does not allow access of a mobile relay device.

9. The method according to claim 7, wherein when the first access network device is a donor node or a fixed relay device, the first indication information corresponding to the first access network device indicates that the first access network device allows access of a mobile relay device; or when the first access network device is a mobile relay device, the first indication information corresponding to the first access network device indicates that the first access network device does not allow access of a mobile relay device.

10. The method according to claim 7, wherein that first indication information corresponding to a first access network device indicates whether the first access network device allows access of a mobile relay device comprises: the first indication information corresponding to the first access network device indicates whether the first access network device is a mobile relay device; and when the first indication information indicates that the first access network device is a mobile relay device, it is determined that the first access network device does not allow access of a relay device; or when the first indication information indicates that the first access network device is not a mobile relay device, it is determined that the first access network device allows access of a relay device.

11. The method according to any one of claims 1 to 10, wherein the first indication information is carried in system information.

12. A communication method, wherein the method is applied to a first relay device, the first relay device is a relay device that initially accesses a network, and the method comprises:
sending first indication information to a first access network device, wherein the first indication information indicates whether the first relay device is a mobile relay device, and the first access network device is a donor node corresponding to a second access network device that is being accessed by the first relay device;
receiving second indication information from the first access network device, wherein the second indication information indicates that the second access network device does not allow access of the first relay device, the second indication information further indicates a third access network device, and the third access network device is an access network device that allows access of the first relay device; and
sending a random access request to the third access network device.

13. A communication method, wherein the method is applied to a first access network device, and comprises:
receiving first indication information from a first relay device, wherein the first indication information indicates whether the first relay device is a mobile relay device, and the first relay device is a relay device that initially accesses a network; and
sending second indication information to the first relay device when a second access network device does not allow access of the first relay device, wherein the second access network device is an access network device that is being accessed by the first relay device, the first access network device is a donor node corresponding to the second access network device, the second indication information indicates that the second access network device does not allow access of the first relay device, the second indication information further indicates a third access network device, and the third access network device is an access network device that allows access of the first relay device.

14. The method according to claim 13, wherein the method further comprises:
when the first indication information indicates that the first relay device is a mobile relay device, and the second access network device does not allow access of a mobile relay device, determining that the second access network device does not allow access of the first relay device; or
when the first indication information indicates that the first relay device is a fixed relay device, and the second access network device is a mobile relay device, determining that the second access network device does not allow access of the first relay device.

15. The method according to claim 13 or 14, wherein the method further comprises:
receiving third indication information from a fourth access network device, wherein the third indication information indicates an access network device that allows access of a relay device or indicates an access network device that allows access of a mobile relay device, the fourth access network device is a donor node corresponding to the third access network device, and the access network device indicated by the third indication information comprises the third access network device.

16. A communication method, wherein the method is applied to a fourth access network device, and comprises:
sending fourth indication information to an access and mobility management function AMF network element when a first relay device successfully accesses a third access network device, wherein the fourth indication information indicates whether the first relay device is a mobile relay device, the first relay device is a relay device that initially accesses a network, and the third access network device is an access network device managed by the fourth access network device.

17. The method according to claim 16, wherein the method further comprises:
sending third indication information to a first access network device, wherein the third indication information indicates an access network device that allows access of a relay device or indicates an access network device that allows access of a mobile relay device, and the access network device indicated by the third indication information comprises the third access network device.

18. A communication method, wherein the method is applied to a first donor node, and comprises:
sending a handover request to a second donor node, wherein the handover request comprises first indication information and second indication information, the first indication information indicates whether a first relay device is a mobile relay device, the first relay device is a to-be-handed-over relay device, the second indication information indicates a first access network device, the first access network device is a target access network device to which the first relay device is handed over, the first donor node is a donor node corresponding to a second access network device, the second access network device is a source access network device from which the first relay device is handed over, and the second donor node is a donor node corresponding to the first access network device; and
receiving a handover request acknowledgment or a handover preparation failure from the second donor node, wherein the handover request acknowledgment indicates that the first access network device allows access of the first relay device, and the handover preparation failure indicates that the first access network device does not allow access of the first relay device.

19. A communication method, wherein the method is applied to a second donor node, and comprises:
receiving a handover request from a first donor node, wherein the handover request comprises first indication information and second indication information, the first indication information indicates whether a first relay device is a mobile relay device, the first relay device is a to-be-handed-over relay device, the second indication information indicates a first access network device, the first access network device is a target access network device to which the first relay device is handed over, the first donor node is a donor node corresponding to a second access network device, the second access network device is a source access network device from which the first relay device is handed over, and the second donor node is a donor node corresponding to the first access network device; and
sending a handover request acknowledgment or a handover preparation failure to the first donor node based on the first indication information, wherein the handover request acknowledgment indicates that the first access network device allows access of the first relay device, and the handover preparation failure indicates that the first access network device does not allow access of the first relay device.

20. The method according to claim 19, wherein the sending a handover request acknowledgment or a handover preparation failure to the first donor node based on the first indication information comprises:
sending the handover preparation failure to the first donor node when the first indication information indicates that the first relay device is a mobile relay device and the first access network device does not allow access of a mobile relay device, or when the first indication information indicates that the first relay device is a fixed relay device and the first access network device is accessed by a mobile relay device; or
sending the handover request acknowledgment to the first donor node when the first indication information indicates that the first relay device is a mobile relay device and the first access network device allows access of a mobile relay device, or when the first indication information indicates that the first relay device is a fixed relay device and the first access network device is a fixed relay device or a donor node.

21. A communication method, wherein the method is applied to a first access network device, and comprises:
sending first indication information to a terminal device served by the first access network device, wherein the first indication information indicates whether the first access network device is a mobile relay device.

22. A communication method, wherein the method is applied to a terminal device, and comprises:
receiving first indication information sent by a first access network device, wherein the first indication information indicates whether the first access network device is a mobile relay device; and
determining, based on the first indication information, whether to access or be handed over to the first access network device.

23. The method according to claim 22, wherein the determining, based on the first indication information, whether to access or hand over to the first access network device comprises at least one of the following:
when the terminal device is on a vehicle, preferentially selecting a mobile relay device for initial access or handover; or
when the terminal device is outside a vehicle, preferentially selecting a non-mobile relay device for initial access or handover.

24. A communication apparatus, wherein the apparatus is used in a first access network device, and comprises a processing unit and a transceiver unit, wherein
the transceiver unit is configured to send, under control of the processing unit, first indication information to a first relay device, wherein the first indication information indicates whether access of a mobile relay device is allowed, and the first relay device is a relay device that initially accesses a network.

25. A communication apparatus, wherein the apparatus is used in a first relay device, the first relay device is a relay device that initially accesses a network, and the apparatus comprises a processing unit and a transceiver unit, wherein
the transceiver unit is configured to receive, under control of the processing unit, a plurality of pieces of first indication information from a plurality of access network devices, wherein first indication information corresponding to a first access network device in the plurality of pieces of first indication information indicates whether the first access network device allows access of a mobile relay device, and the first access network device is any one of the plurality of access network devices; and
the transceiver unit is further configured to send, under control of the processing unit, an access request to a second access network device when the first relay device is a mobile relay device, wherein the second access network device is an access network device that is in the plurality of access network devices and that allows access of a mobile relay device.

26. A communication apparatus, wherein the apparatus is used in a first relay device, the first relay device is a relay device that initially accesses a network, and the apparatus comprises a processing unit and a transceiver unit, wherein
the transceiver unit is configured to send, under control of the processing unit, first indication information to a first access network device, wherein the first indication information indicates whether the first relay device is a mobile relay device, and the first access network device is a donor node corresponding to a second access network device that is being accessed by the first relay device;
the transceiver unit is further configured to receive, under control of the processing unit, second indication information from the first access network device, wherein the second indication information indicates that the second access network device does not allow access of the first relay device, the second indication information further indicates a third access network device, and the third access network device is an access network device that allows access of the first relay device; and
the transceiver unit is further configured to send, under control of the processing unit, a random access request to the third access network device.

27. A communication apparatus, wherein the apparatus is used in a first access network device, and comprises a processing unit and a transceiver unit, wherein
the transceiver unit is configured to receive, under control of the processing unit, first indication information from a first relay device, wherein the first indication information indicates whether the first relay device is a mobile relay device, and the first relay device is a relay device that initially accesses a network; and
the transceiver unit is further configured to send, under control of the processing unit, second indication information to the first relay device when a second access network device does not allow access of the first relay device, wherein the second access network device is an access network device that is being accessed by the first relay device, the first access network device is a donor node corresponding to the second access network device, the second indication information indicates that the second access network device does not allow access of the first relay device, the second indication information further indicates a third access network device, and the third access network device is an access network device that allows access of the first relay device.

28. A communication apparatus, wherein the apparatus is used in a fourth access network device, and comprises a processing unit and a transceiver unit, wherein
the transceiver unit is configured to send, under control of the processing unit, fourth indication information to an access and mobility management function AMF network element when a first relay device successfully accesses a third access network device, wherein the fourth indication information indicates whether the first relay device is a mobile relay device, the first relay device is a relay device that initially accesses a network, and the third access network device is an access network device managed by the fourth access network device.

29. A communication apparatus, wherein the apparatus is used in a first donor node, and comprises a processing unit and a transceiver unit, wherein
the transceiver unit is configured to send, under control of the processing unit, a handover request to a second donor node, wherein the handover request comprises first indication information and second indication information, the first indication information indicates whether a first relay device is a mobile relay device, the first relay device is a to-be-handed-over relay device, the second indication information indicates a first access network device, the first access network device is a target access network device to which the first relay device is handed over, the first donor node is a donor node corresponding to a second access network device, the second access network device is a source access network device from which the first relay device is handed over, and the second donor node is a donor node corresponding to the first access network device; and
the transceiver unit is further configured to receive, under control of the processing unit, a handover request acknowledgment or a handover preparation failure from the second donor node, wherein the handover request acknowledgment indicates that the first access network device allows access of the first relay device, and the handover preparation failure indicates that the first access network device does not allow access of the first relay device.

30. A communication apparatus, wherein the apparatus is used in a second donor node, and comprises a processing unit and a transceiver unit, wherein
the transceiver unit is configured to receive, under control of the processing unit, a handover request from a first donor node, wherein the handover request comprises first indication information and second indication information, the first indication information indicates whether a first relay device is a mobile relay device, the first relay device is a to-be-handed-over relay device, the second indication information indicates a first access network device, the first access network device is a target access network device to which the first relay device is handed over, the first donor node is a donor node corresponding to a second access network device, the second access network device is a source access network device from which the first relay device is handed over, and the second donor node is a donor node corresponding to the first access network device; and
the transceiver unit is further configured to send, under control of the processing unit, a handover request acknowledgment or a handover preparation failure to the first donor node based on the first indication information, wherein the handover request acknowledgment indicates that the first access network device allows access of the first relay device, and the handover preparation failure indicates that the first access network device does not allow access of the first relay device.

31. A communication apparatus, wherein the apparatus is used in a first access network device, and comprises a transceiver unit, wherein
the transceiver unit is configured to send first indication information to a terminal device served by the first access network device, wherein the first indication information indicates whether the first access network device is a mobile relay device.

32. A communication apparatus, wherein the apparatus is used in a terminal device, and comprises a transceiver unit and a processing unit, wherein
the transceiver unit is configured to receive first indication information sent by a first access network device, wherein the first indication information indicates whether the first access network device is a mobile relay device; and
the processing unit is configured to determine, based on the first indication information, whether to access or be handed over to the first access network device.

33. A communication apparatus, comprising a processor, wherein the processor is coupled to a memory, the memory is configured to store a program or instructions, and when the program or the instructions are executed by the processor, the apparatus is enabled to perform the method according to any one of claims 1 to 23.

34. A computer-readable storage medium, wherein the computer-readable storage medium stores a computer program or computer instructions, and when the computer program or the computer instructions are executed by a processor, the method according to any one of claims 1 to 23 is implemented.

35. A computer program product, wherein the computer program product comprises computer program code, and when the computer program code is executed by a processor, the method according to any one of claims 1 to 23 is implemented.
